# EUROPÄISCHE PATENTSCHRIFT

(11) **EP 3 837 172 B1**
(45) Veröffentlichungstag und Bekanntmachung des Hinweises auf die Patenterteilung: **08.07.2026**
(21) Anmeldenummer: 19755607.9
(22) Anmeldetag: 15.08.2019
(51) Int. Cl.: B64D 11/06, B60N 2/90

(54) **FLUGZEUGSITZBEFESTIGUNGSVORRICHTUNG**
AIRCRAFT SEAT FASTENING DEVICE
DISPOSITIF DE FIXATION DE SIÈGE D'AVION

(30) Priorität: 15.08.2018 DE 102018119846
(43) Veröffentlichungstag der Anmeldung: 23.06.2021
(73) Patentinhaber: Recaro Aircraft Seating GmbH & Co. KG, 74523 Schwäbisch Hall (DE)
(72) Erfinder: RIEDEL, Dirk, 74542 Braunsbach (DE); STROBL, Florian, 96181 Rauhenebrach (DE); RECHLIN, Alexander, 74523 Schwäbisch Hall (DE); RÖSSLER, Stefan, 74538 Rosengarten (DE)
(74) Vertreter: Daub, Thomas
(86) Internationale Anmeldenummer: PCT/EP2019/071963
(87) Internationale Veröffentlichungsnummer: WO 2020/035571

(56) Entgegenhaltungen:
- EP-A2- 2 695 813
- WO-A1-2016/142671
- DE-A1- 102012 001 576
- DE-A1- 102014 104 915
- US-A1- 2003 078 145
- US-A1- 2006 263 164
- US-A1- 2011 079 681
- US-A1- 2011 278 887
- US-A1- 2014 191 081
- US-A1- 2015 035 340
- US-A1- 2016 340 045
- US-A1- 2017 246 972
- US-A1- 2017 253 337
- US-A1- 2017 274 999
- US-A1- 2017 275 003
- US-B1- 8 226 163

## Beschreibung

### Stand der Technik

Die Erfindung betrifft eine Flugzeugsitzbefestigungsvorrichtung nach dem Oberbegriff des Patentanspruchs 1.

Es ist bereits eine Flugzeugsitzbefestigungsvorrichtung zur Befestigung wenigstens eines Teils eines Flugzeugsitzes an zumindest einer an einer Flugzeugstruktur befestigten Befestigungsschiene, mit einer Sitzgrundstruktur, die dazu vorgesehen ist, dass zumindest der Flugzeugsitz zumindest teilweise darauf montiert ist, mit wenigstens einem Sitzfuß, der an der Sitzgrundstruktur angebunden ist, und mit zumindest einem Fittingelement, das an dem Sitzfuß angebunden und zumindest dazu vorgesehen ist, mit der Befestigungsschiene gekoppelt zu werden, vorgeschlagen worden.

Das Dokument US 2014191081 A1 offenbart gemäß seiner Zusammenfassung eine Sitzbasis zur Verwendung in Flugzeugen, aufweisend eine erste Querstrebe, eine zweite Querstrebe, ein erstes Bein, ein zweites Bein und eine Grundplatte mit einer ersten biegbaren Lasche und einer zweiten biegbaren Lasche, die von der ersten Lasche weg zeigt. Die erste Querstrebe, die zweite Querstrebe und die Grundplatte sind jeweils so konfiguriert, dass sie in einer ausgefahrenen Position und einer eingefahrenen Position an dem ersten und dem zweiten Bein befestigt werden können. Das erste und zweite Bein sind so konfiguriert, dass sie an Sitzfüßen und Bodenschienen befestigt werden können. Das erste und zweite Querelement sind an der Grundplatte befestigt, sodass eine selektive Drehung des ersten und zweiten Querelements in Reaktion auf eine relative vertikale Bewegung des ersten Beins gegenüber dem zweiten Bein möglich ist.

Die Aufgabe der Erfindung besteht insbesondere darin, eine gattungsgemäße Vorrichtung mit verbesserten Eigenschaften hinsichtlich einer Sicherheit, insbesondere durch eine Reduzierung von Lasten in einer Befestigungsschiene bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzbefestigungsvorrichtung gemäß Anspruch 1.

Die Flugzeugsitzbefestigungsvorrichtung weist wenigstens eine Ausgleichseinheit auf, die an der Sitzgrundstruktur und dem Sitzfuß und dazu vorgesehen ist, zumindest in einem Überlastfall zumindest eine Ausgleichsbewegung der Sitzgrundstruktur zuzulassen. Unter einer "Flugzeugsitzbefestigungsvorrichtung" soll insbesondere eine Vorrichtung verstanden werden, die dazu vorgesehen ist, einen Flugzeugsitz und/oder eine Flugzeugsitzanordnung auf einer Aufständerebene zumindest teilweise zu befestigen. Unter einem "Flugzeugsitz" soll dabei insbesondere ein Sitz verstanden werden, der dazu vorgesehen ist, in einer Flugzeugkabine eines Flugzeugs auf einem Kabinenboden aufgeständert zu werden und auf dem ein Passagier während eines Flugs sitzen kann.

Dabei kann es sich bei dem Flugzeugsitz um einen Einzelsitz handeln, beispielsweise um einen Business- oder Firstclass-Flugzeugsitz, der Teile einer Flugzeugsitzanordnung, wie beispielsweise eine Konsole oder einen Ottoman umfasst. Bei dem Flugzeugsitz kann es sich ebenfalls um einen Flugzeugsitz handeln, der Teil einer Flugzeugsitzreihe aus mehreren Flugzeugsitzen ist, wobei es sich dabei insbesondere um einen Economyclass-Flugzeugsitz handelt. Unter einer "Flugzeugstruktur" soll insbesondere eine Tragstruktur eines Flugzeugs verstanden werden, mit der ein Flugzeugsitz oder ein Flugzeugsitzmodul zur Verwendung in dem Flugzeugsitz fest gekoppelt werden kann. Dabei ist die Flugzeugstruktur vorzugsweise als ein Kabinenboden einer Flugzeugkabine ausgebildet. Unter einer "Befestigungsschiene" soll insbesondere eine Schiene verstanden werden, die vorzugsweise ein Hohlprofil ausbildet, das zur formschlüssigen Verbindung mit einem Element, insbesondere zumindest einem Haltebereich eines Fittingelements, vorgesehen ist. Die Befestigungsschiene ist in einem montierten Zustand mit einem Kabinenboden eines Flugzeugs verbunden, vorzugsweise in den Kabinenboden des Flugzeugs eingelassen. Die Befestigungsschiene weist auf ihrer Oberseite eine Führungsöffnung auf, durch die in einem montierten Zustand zumindest ein Teil des Fittingelements geführt ist. Die Befestigungsschiene weist, in zumindest im Wesentlichen gleichen Abständen, Montagebereiche auf, in denen die Führungsöffnung jeweils einen breiteren Querschnitt aufweist. In den Montagebereichen ist die Führungsöffnung im Wesentlichen kreisrund ausgebildet. Die Montagebereiche sind dazu vorgesehen, dass ein Haltebereich des Fittingelements durch einen der Montagebereiche zur Herstellung einer Formschlussverbindung mit der Befestigungsschiene in die Befestigungsschiene eingeführt werden kann. Unter einer "Sitzgrundstruktur" soll insbesondere eine tragende Struktur des Flugzeugsitzes oder einer Flugzeugsitzanordnung verstanden werden, über die beispielsweise Kräfte durch einen auf dem Flugzeugsitz sitzenden Passagier von einem Sitzbereich des Flugzeugsitzes, sowie Gewichtskräfte des Flugzeugsitzes oder Gewichtskräfte von Teilen der Flugzeugsitzanordnung in die Flugzeugsitzstruktur eingeleitet werden können. Dabei ist es insbesondere denkbar, dass die Sitzgrundstruktur von einem Grundrahmen aus mehreren miteinander verbundenen Rahmenelementen gebildet ist oder von einer Aufnahmeplatte gebildet ist. Grundsätzlich ist es ebenfalls denkbar, dass die Sitzgrundstruktur als ein Teil einer Aufständereinheit ausgebildet ist. Unter einem "Sitzfuß" soll insbesondere ein Element verstanden werden, das eine flugzeugsitzseitige Anbindung für ein Fittingelement aufweist und insbesondere zur Kopplung des Flugzeugsitzes mit der Befestigungsschiene über das Fittingelement vorgesehen ist. Der Sitzfuß weist insbesondere einen Anbindungsbereich für ein Fittingelement auf, über den das Fittingelement fest mit dem Sitzfuß verbunden werden kann. Der Sitzfuß ist insbesondere als ein Bauteil des Flugzeugsitzes ausgebildet. Der Sitzfuß ist in einem montierten Zustand über eine Sitzfußanbindung mit der Flugzeugsitzgrundstruktur fest verbunden. Unter einem "Fittingelement" soll insbesondere ein Element verstanden werden, das in zumindest einem Betriebszustand zu einer Befestigung eines Flugzeugsitzes oder einer Flugzeugsitzanordnung, insbesondere an einem Kabinenboden eines Flugzeugs, vorgesehen ist. Insbesondere ist das Fittingelement in dem Betriebszustand in einer Ausnehmung in dem Boden, insbesondere in einer Befestigungsschiene in dem Boden, gehalten. Vorzugsweise weist das Fittingelement zumindest einen Befestigungsbereich auf, der zumindest ein Befestigungsmittel umfasst. Insbesondere ist das Fittingelement in der Befestigungsschiene entlang einer zumindest im Wesentlichen parallel zu dem Boden ausgerichteten Richtung gelagert. Unter "gekoppelt" soll insbesondere direkt oder indirekt miteinander verbunden verstanden werden, wobei bei einer indirekten Anbindung ein oder mehrere Bauteile zwischen den zwei indirekt gekoppelten Bauteilen angeordnet sein können. Unter einer "Ausgleichseinheit" soll insbesondere eine Einheit verstanden werden, die zumindest in einem Betriebszustand insbesondere dazu vorgesehen ist, zwischen zumindest zwei Elementen, wie insbesondere einem Kabinenboden und zumindest einem Teil der Sitzgrundstruktur eine zerstörungsfreie Relativbewegung zuzulassen. Dabei ist die von der Ausgleichseinheit zugelassene Relativbewegung vorzugsweise auf eine Maximalbewegung begrenzt. Die Relativbewegung kann insbesondere von einer Rotations-, von einer Linearbewegung oder von einer Kombination einer Rotations- und Linearbewegung gebildet sein. Unter einer "zerstörungsfreien Relativbewegung" soll dabei insbesondere eine Relativbewegung verstanden werden, die ohne mechanische Zerstörung eines der Elemente oder der Ausgleichseinheit durchgeführt werden kann. Dabei ist eine zerstörungsfreie Relativbewegung nach einem Wegfall einer Kraft, die zur Relativbewegung geführt hat, vorzugsweise wieder reversibel. Unter einem "Überlastfall" soll insbesondere ein von einem Normalbetrieb verschiedener Betriebszustand verstanden werden, beispielsweise eine in einem Crashtest gezielt herbeigeführte Überbelastung der Flugzeugsitzvorrichtung. Unter einer "Ausgleichsbewegung" soll insbesondere die zerstörungsfreie Relativbewegung wenigstens zweier Elemente verstanden werden, die mittels der Ausgleichseinheit darstellbar ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann eine besonders sichere und stabile Flugzeugsitzbefestigungsvorrichtung bereitgestellt werden, da zumindest ein Teil einer Sitzgrundstruktur in einem Überlastfall eine Relativbewegung zu einer Flugzeuggrundstruktur ausführen kann.

Weiter wird vorgeschlagen, dass die wenigstens eine Ausgleichseinheit zwischen der Sitzgrundstruktur und dem Sitzfuß angeordnet ist. Unter "zwischen der Sitzgrundstruktur und dem Sitzfuß angeordnet" soll insbesondere verstanden werden, dass die Ausgleichseinheit räumlich und oder insbesondere auch funktionstechnisch zwischen der Sitzgrundstruktur und dem Sitzfuß positioniert ist. Dadurch kann die Ausgleichseinheit besonders vorteilhaft und einfach angeordnet werden.

Ferner wird vorgeschlagen, dass die Ausgleichseinheit in einer Sitzfußanbindung integriert ist, über die der wenigstens eine Sitzfuß an der Sitzgrundstruktur angebunden ist. Unter einer "Sitzfußanbindung" soll insbesondere eine Anbindung aus einem oder mehreren Elementen, wie insbesondere Befestigungselementen verstanden werden, über die ein Sitzfuß vorzugsweise kraft- und/oder formschlüssig mit einer Sitzgrundstruktur verbunden ist. Dadurch kann die Ausgleichseinheit besonders einfach und vorteilhaft in die Flugzeugsitzbefestigungsvorrichtung integriert werden.

Es wird weiterhin vorgeschlagen, dass die Ausgleichseinheit dazu vorgesehen ist, zumindest in einem Überlastfall zumindest eine Rotation des Sitzfußes um eine Rotationsachse relativ zu der Sitzgrundstruktur zuzulassen. Dadurch kann eine besonders vorteilhafte Ausgleichsbewegung zugelassen werden.

Des Weiteren wird vorgeschlagen, dass die Ausgleichseinheit dazu vorgesehen ist, eine Rotation von zumindest einem Grad zuzulassen. Unter einer "Rotation von zumindest einem Grad" soll insbesondere verstanden werden, dass eine mögliche Rotation die die Ausgleichseinheit zulässt zumindest ein Grad, vorteilhaft mehr als 5 Grad und in einer besonders vorteilhaften Ausgestaltung mehr als 10 Grad beträgt. Dadurch kann die Ausgleichseinheit besonders vorteilhaft ausgebildet werden.

Weiterhin wird vorgeschlagen, dass die Ausgleichseinheit dazu vorgesehen ist, eine Rotation auf maximal 15 Grad zu begrenzen. Unter einer "Rotation von maximal 15 Grad" soll insbesondere verstanden werden, dass die Rotation durch die Ausgleichseinheit auf 15 Grad, bevorzugt auf 13 Grad und in einer besonders vorteilhaften Ausgestaltung auf maximal 11 Grad begrenzt ist. Dadurch kann die Ausgleichseinheit besonders vorteilhaft ausgebildet werden.

Außerdem wird vorgeschlagen, dass eine von der Ausgleichseinheit durchgeführte Ausgleichsbewegung zumindest im Wesentlichen frei von einer elastischen und/oder plastischen Verformung ist. Unter "zumindest im Wesentlichen frei von einer elastischen und/oder plastischen Verformung" soll insbesondere verstanden werden, dass die Ausgleichsbewegung insbesondere rein durch eine Relativbewegung zweier voneinander getrennt ausgebildeter Elemente gegeben ist und nicht auf der elastischen und/oder plastischen Verformung wenigstens eines der Elemente beruht. Dadurch kann die Ausgleichseinheit besonders vorteilhaft ausgebildet werden.

Die Ausgleichseinheit weist wenigstens einen zentralen Drehzapfen auf, mittels dem der Sitzfuß positionsfest mit der Sitzgrundstruktur gekoppelt ist. Dadurch kann die Ausgleichseinheit besonders einfach an der Sitzgrundstruktur positioniert werden.

Die Ausgleichseinheit weist wenigstens ein exzentrisch zu dem Drehzapfen angeordnetes Verbindungsmittel auf, das zumindest einseitig in einem Durchgangsloch angeordnet ist. Unter einem "exzentrisch angeordneten Verbindungsmittel" soll insbesondere verstanden werden, dass das Verbindungsmittel in Bezug auf den im Wesentlichen mittig angeordneten Drehzapfen beabstandet angeordnet ist. Unter "zumindest einseitig in einem Durchgangsloch angeordnet" soll dabei insbesondere verstanden werden, dass das Verbindungsmittel zumindest in einem von der Sitzgrundstruktur ausgebildeten Durchgangsloch und/oder in einem von dem Sitzfuß ausgebildeten Durchgangsloch geführt ist. Unter einem "Verbindungsmittel" soll insbesondere ein Verbindungselement verstanden werden, das zur Verbindung wenigstens zweier anderer Elemente vorgesehen ist und in einem verbundenen Zustand vorzugsweise zumindest dazu vorgesehen ist, eine Bewegung der wenigstens zwei miteinander verbundenen Elemente in einer Bewegungsrichtung zu verhindern. Unter einem Verbindungsmittel soll insbesondere ein Stift, ein Pin, eine Niete oder vorzugsweise eine Schraube verstanden werden. Dadurch kann die Ausgleichseinheit besonders einfach zur Bereitstellung einer rotatorischen Ausgleichsbewegung ausgebildet werden.

Weiter wird vorgeschlagen, dass die Ausgleichseinheit wenigstens eine Positionierungseinheit aufweist, die das zumindest eine Verbindungsmittel zumindest in einem Normalbetriebszustand in dem Durchgangsloch in einer Normalposition positioniert. Unter einer "Positionierungseinheit" soll insbesondere eine Einheit verstanden werden, die zumindest zwei Elemente vorzugsweise bei einer Montage und in einem Normalbetriebszustand in einer gewünschten Position zueinander hält. Unter einem "Normalbetriebszustand" soll insbesondere ein Betriebszustand verstanden werden, in dem lediglich für einen Flugbetrieb übliche Kräfte, also insbesondere durch einen auf dem Sitz sitzenden Passagier und entsprechende Beschleunigungskräfte, die während eines Flugs, des Starts oder der Landung auftreten. Unter einer "Normalposition in dem gekrümmten Durchgangsloch" soll insbesondere eine Position des Verbindungsmittels in dem Durchgangsloch verstanden werden, in der der Sitzfuß eine Normalposition zu dem Sitzgrundmodul aufweist. Die Normalposition ist vorzugsweise mittig in dem Durchgangsloch angeordnet, sodass eine Ausgleichbewegung in beide Rotationsrichtungen gleich erfolgen kann. Dadurch kann vorteilhaft ein funktionssicherer Normalbetrieb sichergestellt werden.

Ferner wird vorgeschlagen, dass die Positionierungseinheit das Verbindungsmittel durch eine Vorspannkraft kraftschlüssig in der Normalposition hält. Dadurch kann vorteilhaft die Positionierungseinheit besonders einfach ausgebildet werden.

Die erfindungsgemäße Flugzeugsitzbefestigungsvorrichtung soll hierbei nicht auf die oben beschriebene Anwendung und Ausführungsform beschränkt sein. Insbesondere kann die erfindungsgemäße Flugzeugsitzbefestigungsvorrichtung zu einer Erfüllung einer hierin beschriebenen Funktionsweise eine von einer hierin genannten Anzahl von einzelnen Elementen, Bauteilen und Einheiten abweichende Anzahl aufweisen, solange die resultierende Flugzeugsitzbefestigungsvorrichtung unter die Ansprüche fällt.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Flugzeugsitzbefestigungsvorrichtung in einem ersten Ausführungsbeispiel während eines Überlastfalls,
- Fig. 2: eine schematische Detailansicht eines Sitzfußes, der in dem Überlastfall durch eine Ausgleichseinheit relativ zu einer Sitzgrundstruktur verdreht ist und
- Fig. 3: eine weitere Detailansicht der Ausgleichseinheit in einem Überlastfall,
- Fig. 4: eine schematische Explosionsdarstellung eines Teils der Flugzeugsitzbefestigungsvorrichtung,
- Fig. 5: eine schematische Darstellung einer Flugzeugsitzbefestigungsvorrichtung in einem zweiten Ausführungsbeispiel, das nicht den Ansprüchen entspricht, während eines Normalbetriebszustands,
- Fig. 6: eine schematische Schnittansicht der Flugzeugsitzbefestigungsvorrichtung in einem Überlastfall,
- Fig. 7: eine weitere Darstellung der Flugzeugsitzbefestigungsvorrichtung in einem Überlastfall,
- Fig. 8: eine schematische Darstellung einer Flugzeugsitzbefestigungsvorrichtung in einem dritten Ausführungsbeispiel, das nicht den Ansprüchen entspricht, während eines Normalbetriebszustands,
- Fig. 9: eine weitere Darstellung der Flugzeugsitzbefestigungsvorrichtung in einem Überlastfall,
- Fig. 10: eine Detaildarstellung der Flugzeugsitzbefestigungsvorrichtung in einem Überlastfall,
- Fig. 11: eine schematische Darstellung einer Flugzeugsitzbefestigungsvorrichtung in einem vierten Ausführungsbeispiel, das nicht den Ansprüchen entspricht, während eines Normalbetriebszustands,
- Fig. 12: eine weitere Darstellung der Flugzeugsitzbefestigungsvorrichtung in einem Überlastfall,
- Fig. 13: eine Detaildarstellung der Flugzeugsitzbefestigungsvorrichtung in einem Überlastfall und
- Fig. 14: eine schematische Detaildarstellung einer Flugzeugsitzbefestigungsvorrichtung in einem fünften Ausführungsbeispiel, das nicht den Ansprüchen entspricht, während eines Überlastfalls.

### Beschreibung der Ausführungsbeispiele

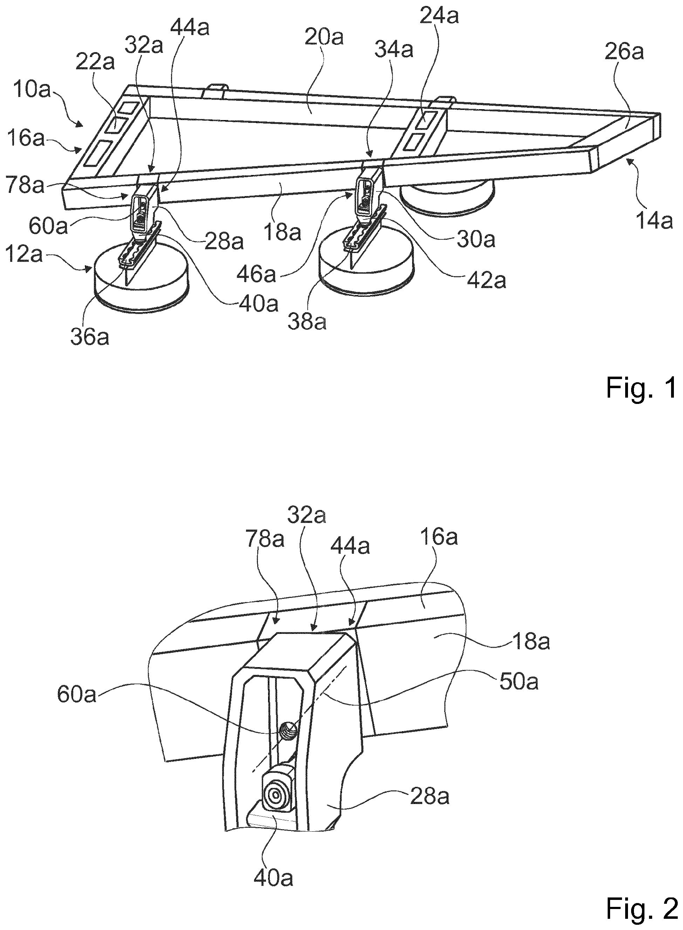

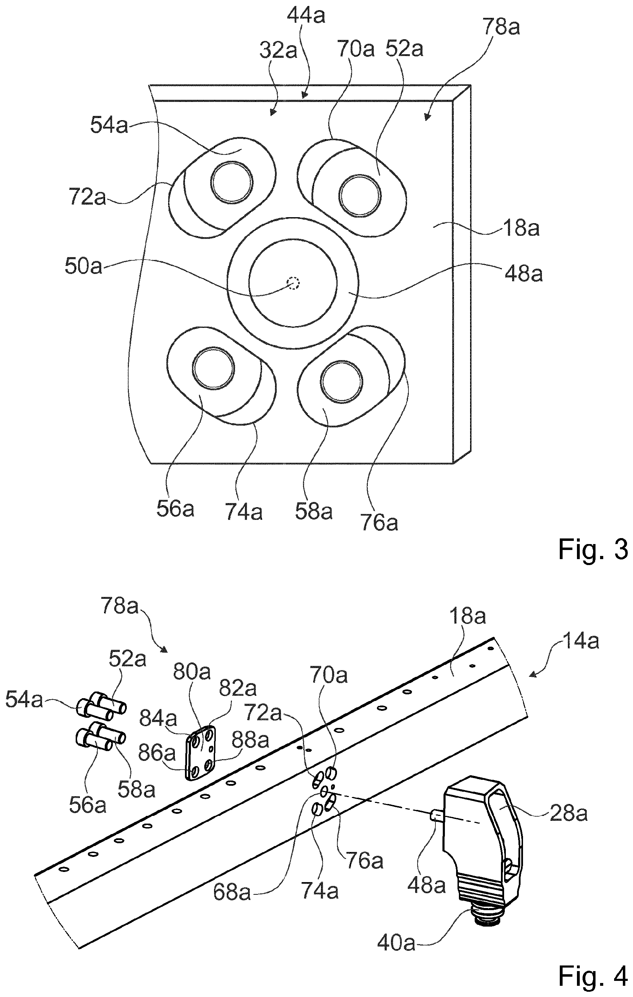

In den Figuren 1 bis 3 ist ein erstes Ausführungsbeispiel der erfindungsgemäßen Flugzeugsitzbefestigungsvorrichtung dargestellt. Die Flugzeugsitzbefestigungsvorrichtung ist Teil einer Flugzeugsitzanordnung 10a. Die Flugzeugsitzanordnung 10a umfasst einen Flugzeugsitz. Der Flugzeugsitz ist als ein Businessclass- oder Firstclass-Flugzeugsitz ausgebildet. Die Flugzeugsitzanordnung 10a umfasst weiter einen Flugzeugsitzaufbau. Der Flugzeugsitzaufbau ist dabei als ein Aufbau ausgebildet, der eine Umhausung für den Flugzeugsitz sowie insbesondere eine Konsole mit Ablagemöglichkeiten und beispielsweise auch einen Fußraum für einen weiteren Flugzeugsitz ausbildet. Der Flugzeugsitzaufbau sowie der Flugzeugsitz selbst sollen hier nicht weiter beschrieben werden und sind in den Figuren auch nicht näher dargestellt. Bei dem Flugzeugsitz und dem Flugzeugsitzaufbau handelt es sich um aus dem Stand der Technik bekannte Flugzeugsitze bzw. Flugzeugsitzaufbauten. Die genaue Ausgestaltung des Flugzeugsitzes bzw. des Flugzeugsitzaufbaus der Flugzeugsitzanordnung 10a ist nicht relevant für den erfindungsgemäßen Gedanken der Flugzeugsitzbefestigungsvorrichtung. Die Flugzeugsitzanordnung 10a ist dazu vorgesehen, in einem Flugzeug angebracht zu werden. Die Flugzeugsitzanordnung 10a ist insbesondere dazu vorgesehen, in einer Flugzeugkabine aufgeständert zu werden. Die Flugzeugkabine bildet eine Flugzeugstruktur 12a aus. Die Flugzeugstruktur 12a ist als ein Kabinenboden ausgebildet. Zur Anbindung von Flugzeugsitzanordnungen 10a umfasst die Flugzeugkabine in die als Kabinenboden ausgebildete Flugzeugstruktur 12a eingelassene Befestigungsschienen 36a, 38a auf. Die Befestigungsschienen 36a, 38a verlaufen parallel zueinander und sind starr mit der Flugzeugstruktur 12a verbunden.

Die Flugzeugsitzbefestigungsvorrichtung umfasst eine Sitzgrundstruktur 14a. Die Sitzgrundstruktur 14a ist insbesondere Teil der Flugzeugsitzanordnung 10a. Die Sitzgrundstruktur 14a ist dazu vorgesehen, dass zumindest der Flugzeugsitz darauf montiert ist. Die Sitzgrundstruktur 14a ist von einem Grundrahmen 16a gebildet. Der Grundrahmen 16a weist zwei Querträger 18a, 20a sowie drei Längsträger 22a, 24a, 26a auf. Die Querträger 18a, 20a sind über die Längsträger 22a, 24a, 26a miteinander verbunden. Die Querträger 18a, 20a und die Längsträger 22a, 24a ,26a sind jeweils fest, vorzugsweise insbesondere starr miteinander verbunden. Die Querträger 18a, 20a und die Längsträger 22a, 24a, 26a sind jeweils insbesondere miteinander verschraubt. Grundsätzlich ist es auch denkbar, dass die Querträger 18a, 20a und die Längsträger 22a, 24a ,26a jeweils über eine andere, dem Fachmann als sinnvoll erscheinende Weise form-, kraft-, und/oder stoffschlüssig miteinander verbunden sind, beispielsweise über eine Nietverbindung oder über eine Schweißverbindung. Grundsätzlich ist es ebenfalls denkbar, dass die Grundrahmen 16a aus einer anderen Anzahl an Elementen, also inbesondere einer anderen Anzahl an Quer- und/oder Längsträgern gebildet ist. Der Grundrahmen 16a bildet eine Grundstruktur aus, auf der der Flugzeugsitz sowie der Flugzeugsitzaufbau fest montierbar sind. Der Grundrahmen 16a bildet einen zumindest im Normalbetrieb im Wesentlichen starren Grundaufbau für den Flugzeugsitz und den Flugzeugsitzaufbau aus. Grundsätzlich ist es möglich, dass sich der Grundrahmen 16a in einem Überlastfall, beispielsweise bei einem Crashtest, insbesondere in einem Fall, in dem sich der Kabinenboden verformt, durch die wirkenden Kräfte verwindet. Insbesondere bei aus dem Stand der Technik bekannten Grundrahmen führen dabei einwirkende Kräfte, insbesondere bei der sogenannten "Pitch and Roll Vorverformung", die bei Tests zur Zulassung der Flugzeugsitzanordnungen durchgeführt wird, zu Verwindungen des Grundrahmens 16a, die insbesondere zu Brüchen in dem Grundrahmen 16a oder den Befestigungsschienen 36a, 38a führen können. Deshalb ist es vorteilhaft, Verwindungen des Grundrahmens 16a und vorzugsweise der gesamten Sitzgrundstruktur 14a auch in einem Überlastfall möglichst gering zu halten, um ein Versagen des Grundrahmens 16a, insbesondere durch einen Bruch, zu vermeiden. Die erfindungsgemäße Flugzeugsitzbefestigungsvorrichtung hat insbesondere die Aufgabe, eine solche Verwindung des Grundrahmens 16a in einem Überlastfall so gering wie möglich zu halten, vorzugsweise komplett zu vermeiden.

Die Flugzeugsitzbefestigungsvorrichtung umfasst mehrere Sitzfüße 28a, 30a. Die Sitzfüße 28a, 30a sind insbesondere als Sitzgrundstrukturfüße ausgebildet. Die Flugzeugsitzbefestigungsvorrichtung umfasst insbesondere vier Sitzfüße 28a, 30a. Die Flugzeugsitzbefestigungsvorrichtung umfasst zwei vordere und zwei hintere Sitzfüße 28a, 30a, wobei lediglich die zwei vorderen Sitzfüße 28a, 30a näher dargestellt sind. Die dargestellten vorderen und die hinteren Sitzfüße 28a, 30a können dabei gleich ausgebildet sein oder aber auch unterschiedliche Ausgestaltungen aufweisen. Grundsätzlich ist es ebenso denkbar, dass die Flugzeugsitzbefestigungsvorrichtung eine andere Anzahl an Sitzfüßen 28a, 30a aufweist. Die Sitzfüße 28a, 30a sind zur Kopplung der Sitzgrundstruktur 14a mit einer Flugzeugstruktur 12a vorgesehen. Die Sitzfüße 28a, 30a sind jeweils über eine Sitzfußanbindung 32a, 34a fest mit dem Grundrahmen 16a verbunden. Über die Sitzfußanbindungen 32a, 34a sind die Sitzfüße 28a, 30a verliersicher mit dem Grundrahmen 16a gekoppelt. Die Flugzeugsitzbefestigungsvorrichtung umfasst je Sitzfuß 28a, 30a ein Fittingelement 40a, 42a. Die Fittingelemente 40a, 42a sind zur Kopplung mit den Befestigungsschienen 36a, 38a vorgesehen. Die Fittingelemente 40a, 42a sind in montiertem Zustand mit einem ersten Ende in der Befestigungsschiene 36a, 38a angeordnet. Ein zweites Ende der Fittingelemente 40a, 42a ist in montiertem Zustand fest mit einem Sitzfuß 28a, 30a gekoppelt. Die Sitzfüße 28a, 30a sind jeweils über das Fittingelement 40a, 42a mit der Befestigungsschiene 36a, 38a verbunden.

Die Flugzeugsitzbefestigungsvorrichtung umfasst mehrere Ausgleichseinheiten 44a, 46a. Insbesondere weist die Flugzeugsitzbefestigungsvorrichtung je Sitzfuß 28a, 30a eine Ausgleichseinheit 44a, 46a auf. Die Ausgleichseinheiten 44a, 46a sind dazu vorgesehen, in einem Überlastfall eine Ausgleichsbewegung der Sitzgrundstruktur 14a zuzulassen. Die Ausgleichseinheiten 44a, 46a sind insbesondere dazu vorgesehen, eine Ausgleichsbewegung der Sitzgrundstruktur 14a relativ zu der Flugzeugstruktur 12a zuzulassen. Die Ausgleichseinheiten 44a, 46a sind jeweils an den Sitzfüßen 28a, 30a angeordnet. Die Ausgleichseinheiten 44a, 46a sind insbesondere jeweils zwischen einem Sitzfuß 28a, 30a und dem Grundrahmen 16a der Sitzgrundstruktur 14a angeordnet. Die Ausgleichseinheiten 44a, 46a sind gleich ausgebildet, weswegen im Folgenden lediglich die eine Ausgleichseinheit 44a näher beschrieben wird. Zur Erläuterung der Ausgleichseinheit 46a sowie der weiteren, nicht in den Figuren angezogenen Ausgleichseinheiten kann die folgende Beschreibung der Ausgleichseinheit 44a herangezogen werden. Die Ausgleichseinheit 44a ist in die Sitzfußanbindung 32a integriert, über die der Sitzfuß 28a an die Sitzgrundstruktur 14a angebunden ist. Die Ausgleichseinheit 44a ist einstückig mit der Sitzfußanbindung 32a ausgebildet. Die Ausgleichseinheit 44a weist einen zentralen Drehzapfen 48a auf. Über den Drehzapfen 48a der Ausgleichseinheit 44a sind der Sitzfuß 28a und der Grundrahmen 16a miteinander gekoppelt. Der Drehzapfen 48a weist eine zylindrische Form auf. Grundsätzlich wäre es aber auch ebenso denkbar, dass der Drehzapfen zumindest teilweise konisch ausgebildet ist. Grundsätzlich wäre es auch denkbar, dass die Ausgleichseinheit 44a anstatt des zentralen Drehzapfens 48a eine Kulissenführung aufweist, die insbesondere exzentrisch zu einer Position des Drehzapfens 48a angeordnet wäre. Die Kulissenführung könnte dabei beispielsweise durch gekrümmte Langlöcher ausgebildet werden, in denen entsprechende Stiftelemente über eine Spielpassung geführt sind. Eine Kulissenführung könnte dabei insbesondere durch zumindest zwei Lagerstellen ausgebildet sein. Vorzugsweise bildet die Kulissenführung aber vier Lagerstellen aus. Der Drehzapfen 48a bildet insbesondere eine Rotationsachse 50a aus, über die der Sitzfuß 28a relativ zu dem Grundrahmen 16a verschwenkbar ist. Durch den Drehzapfen 48a ist der Sitzfuß 28a zu dem Grundrahmen 16a positioniert. Durch den Drehzapfen 48a ist der Sitzfuß 28a positionsfest mit der Sitzgrundstruktur 14a gekoppelt. Der Drehzapfen 48a ist fest mit dem Sitzfuß 28a ausgebildet. Der Drehzapfen 48a ist dabei vorzugsweise einstückig mit dem Sitzfuß 28a ausgebildet. Grundsätzlich wäre es auch denkbar, dass der Drehzapfen 48a auf eine andere Weise, beispielsweise durch eine kraft-, form- und/oder stoffschlüssige Verbindung fest mit dem Sitzfuß 28a gekoppelt ist. Der Grundrahmen 16a weist ein Aufnahmeloch 68a auf, in dem der Drehzapfen 48a in einem montierten Zustand angeordnet ist. Der Drehzapfen 48a ist über eine Spielpassung in dem Aufnahmeloch 68a angeordnet, sodass sich der Drehzapfen 48a insbesondere einfach in dem Aufnahmeloch 68a drehen kann.

Die Ausgleichseinheit 44a weist vier exzentrisch zu dem Drehzapfen 48a angeordnete Verbindungsmittel 52a, 54a, 56a, 58a auf. Die Verbindungsmittel 52a, 54a, 56a, 58a sind als Schraubenelemente ausgebildet. Die Verbindungsmittel 52a, 54a, 56a, 58a sind positionsfest mit dem Sitzfuß 28a verbunden. Der Sitzfuß 28a weist dazu in einer Montagefläche vier Durchgangslöcher 60a auf, durch die jeweils eines der Verbindungsmittel 52a, 54a, 56a, 58a geführt ist. Zur Anbindung der Verbindungsmittel 52a, 54a, 56a, 58a weist der Grundrahmen 16a vier Durchgangslöcher 70a, 72a, 74a, 76a auf. Die Verbindungsmittel 52a, 54a, 56a, 58a sind in einem montierten Zustand durch jeweils eines der Durchgangslöcher 70a, 72a, 74a, 76a geführt. Die Durchgangslöcher 70a, 72a, 74a, 76a weisen jeweils einen gleichen Abstand zu dem zentralen Drehzapfen 48a, sowie eine gleiche Länge auf. Die Durchgangslöcher 70a, 72a, 74a, 76a sind dabei in einer Umfangsrichtung beabstandet um den Drehzapfen 48a angeordnet. Die Durchgangslöcher 70a, 72a, 74a, 76a sind als gekrümmte Langlöcher ausgebildet. Die Durchgangslöcher 70a, 72a, 74a, 76a weisen jeweils einen gleichen Krümmungsradius auf. Die Durchgangslöcher 70a, 72a, 74a, 76a weisen insbesondere eine Breite auf, die breiter ist als ein Mittelbereich, also ein Schaftbereich der Verbindungsmittel 52a, 54a, 56a, 58a. Grundsätzlich wäre es auch denkbar, dass die Durchgangslöcher 70a, 72a, 74a, 76a eine beliebige andere Form aufweisen die eine entsprechende gewünschte Rotation in einem Überlastfall zulässt.

Die Ausgleichseinheit 44a umfasst eine Positionierungseinheit 78a. Die Positionierungseinheit 78a umfasst eine Halteplatte 80a. Die Halteplatte 80a ist zur Positionierung der Verbindungsmittel 52a, 54a, 56a, 58a vorgesehen. Die Halteplatte 80a ist als eine gemeinsame Unterlegscheibe für die Verbindungsmittel 52a, 54a, 56a, 58a vorgesehen. Die Halteplatte 80a ist zwischen einem Kopf der Verbindungsmittel 52a, 54a, 56a, 58a und dem Grundrahmen 16a, insbesondere dem Querträger 18a angeordnet. Die Halteplatte 80a ist dazu vorgesehen, dass eine Kraft die durch den Kopf der als Schrauben ausgebildeten Verbindungsmittel 52a, 54a, 56a, 58a auf den Querträger 18a wirken, auf eine größere Anlagefläche des Querträgers wirken. Die Halteplatte 80a ist auf einer Innenseite des Querträgers 18a, die dem Sitzfuß 28a gegenüberliegt, angeordnet und liegt an dem Querträger 18a an. Die Halteplatte weist vier Durchgangslöcher 82a, 84a, 86a, 88a auf, durch die jeweils eins der Verbindungsmittel 52a, 54a, 56a, 58a geführt ist. Die Halteplatte 80a ist vorzugsweise als eine gefräste Platte, beispielsweise aus einem Edelstahl ausgebildet. Durch die Halteplatte 80a kann eine einfachere und positionsgenauere Montage des Sitzfußes 28a erfolgen. Grundsätzlich wäre es auch denkbar, dass jedes Verbindungsmittel 52a, 54a, 56a, 58a eine separate Unterlegscheibe, oder beispielsweise zwei Verbindungsmittel 52a, 54a, 56a, 58a jeweils eine gemeinsame als Unterlegscheibe ausgebildete Halteplatte aufweisen. Grundsätzlich wäre es dabei auch denkbar, dass die Unterlegscheiben dabei Sicherungsfedern aufweisen. Die Positionierungseinheit 78a umfasst nicht näher dargestellte Sicherungsmittel, mittels denen die Verbindungsmittel 52a, 54a, 56a, 58a in den Durchgangslöchern 70a, 72a, 74a, 76a und den Durchgangslöchern 60a gesichert sind. Die Sicherungsmittel sind dabei insbesondere als Innengewinde in den Durchgangslöchern 60a ausgebildet. Die Sicherungsmittel sind dabei vorzugsweise insbesondere als in die Durchgangslöcher 70a, 72a, 74a, 76a eingebrachte Buchsen ausgebildet, die jeweils ein Innengewinde aufweisen. Die als Innengewinde ausgebildeten Sicherungsmittel sind korrespondierend zu den Außengewinden der als Schrauben ausgebildeten Verbindungsmittel 52a, 54a, 56a, 58a ausgebildet. Grundsätzlich ist es auch denkbar, dass die Sicherungsmittel als Muttern ausgebildet sind. Durch Anziehen der als Schrauben ausgebildeten Verbindungsmittel 52a, 54a, 56a, 58a in den als Innengewinde ausgebildeten Sicherungsmitteln werden der Sitzfuß 28a und der Grundrahmen 16a mit ihren Montageflächen aneinandergedrückt und so gegeneinander verspannt. Der Grundrahmen 16a und der Sitzfuß 28a sind über die Verbindungsmittel 52a, 54a, 56a, 58a, die Halteplatte 80a und die Sicherungsmittel der Positionierungseinheit 78a kraftschlüssig miteinander verbunden. Durch die Positionierungseinheit 78a sind die Verbindungsmittel 52a, 54a, 56a, 58a in einem Normalbetriebszustand in einer Normalposition in dem entsprechenden Durchgangsloch 70a, 72a, 74a, 76a positioniert. In der Normalposition sind die Verbindungsmittel 52a, 54a, 56a, 58a mittig in dem jeweiligen Durchgangsloch 70a, 72a, 74a, 76a positioniert. Durch eine kraftschlüssige Kopplung des Sitzfußes 28a mit dem Grundrahmen 16a mittels der Verbindungsmittel 52a, 54a, 56a, 58a und der Sicherungsmittel der Positionierungseinheit 78a sind der Sitzfuß 28a und der Grundrahmen 16a bis zu einer definierten Maximalkraft starr miteinander verbunden und insbesondere nicht zueinander verdrehbar. Die definierte Maximalkraft ist durch eine Vorspannkraft, mittels der die als Schrauben ausgebildeten Verbindungsmittel angezogen werden, definiert. Je höher die Vorspannkraft, desto größer eine definierte Maximalkraft, die über die kraftschlüssige Verbindung zwischen dem Sitzfuß 28a und dem Grundrahmen 16a übertragen werden kann. Wird die definierte Maximalkraft überschritten, löst sich die kraftschlüssige Verbindung zwischen dem Sitzfuß 28a und dem Grundrahmen 16a und der Sitzfuß 28a kann zu dem Grundrahmen 16a um die Rotationsachse 50a rotieren. Durch die mittels der Vorspannkraft einstellbare definierte Maximalkraft, ab der die Ausgleichseinheit 44a eine Ausgleichsbewegung zulässt, kann die Flugzeugsitzbefestigungsvorrichtung besonders einfach an unterschiedliche Flugzeugsitze und Flugzeugsitzaufbauten angepasst werden.

Die Ausgleichseinheiten 44a, 46a sind dazu vorgesehen, in einem Überlastfall eine Rotation des jeweiligen Sitzfußes 28a, 30a um die von dem jeweiligen Drehzapfen 48a der Ausgleichseinheit 44a, 46a ausgebildete Rotationsachse 50a relativ zu der Sitzgrundstruktur 14a, insbesondere dem Grundrahmen 16a, zuzulassen. Die Ausgleichseinheiten 44a, 46a sind insbesondere dazu vorgesehen, eine Ausgleichsbewegung, also eine Rotation von zumindest 2 Grad zuzulassen. Die Ausgleichseinheiten 44a, 46a begrenzen die Ausgleichsbewegung, also die Rotation um den entsprechenden Drehzapfen 48a auf 11 Grad in beide Rotationsrichtungen. Grundsätzlich wäre es auch denkbar, dass die Rotation auf 15 Grad begrenzt wird. Die von den Ausgleichseinheiten 44a, 46a ausgeführten Ausgleichsbewegungen sind im Wesentlichen frei von einer elastischen oder plastischen Verformung. Die Ausgleichsbewegungen werden allein durch eine Rotation des Drehzapfens 48a in dem entsprechenden Aufnahmeloch 68a hervorgerufen. Wie in Figur 1 zu erkennen ist, können die einzelnen Ausgleichseinheiten 44a, 46a unterschiedlich große Ausgleichsbewegungen in einem Überlastfall ausführen. Die einzelnen Ausgleichseinheiten 44a, 46a können unabhängig voneinander Ausgleichsbewegungen ausführen. Durch die Ausgleichseinheiten 44a, 46a kann bei einem Überlastfall, bei dem sich insbesondere eine Flugzeugstruktur, also insbesondere der Kabinenboden verwindet, die Sitzgrundstruktur 14a von der Flugzeugstruktur entkoppelt werden. Dadurch kann insbesondere eine übermäßige Verwindung des Grundrahmens 16a der Sitzgrundstruktur 14a verhindert werden. Da in einem Überlastfall durch Verwendung der Ausgleichseinheiten 44a, 46a weniger große Kräfte auf die Sitzgrundstruktur 14a und insbesondere den Grundrahmen 16a wirken, kann der Grundrahmen 16a im Vergleich zu einem Grundrahmen ohne Ausgleichseinheiten 44a, 46a schwächer, also insbesondere leichter ausgebildet werden.

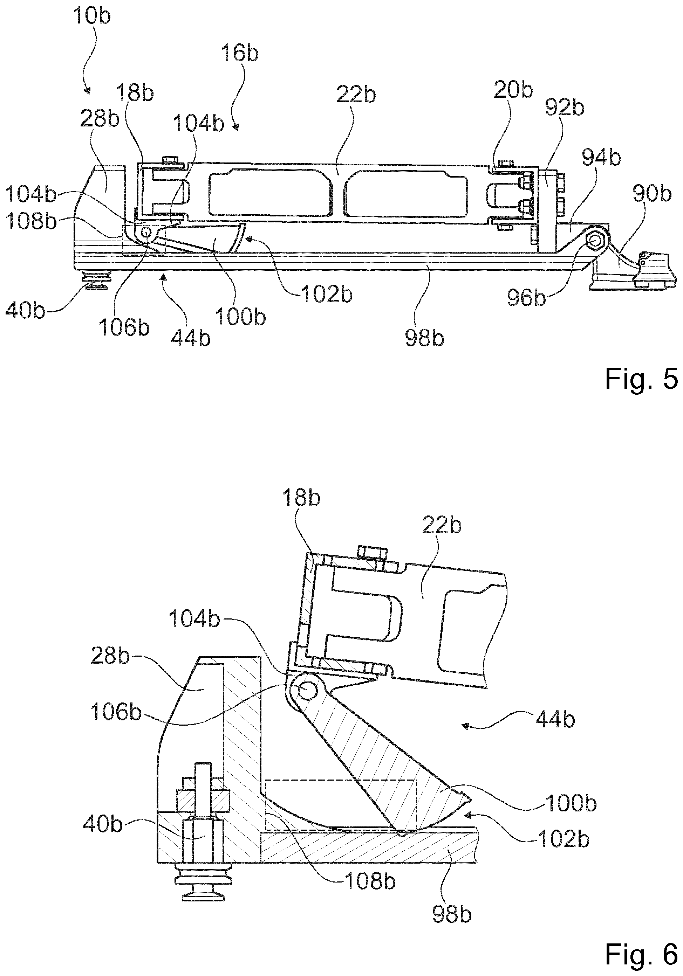

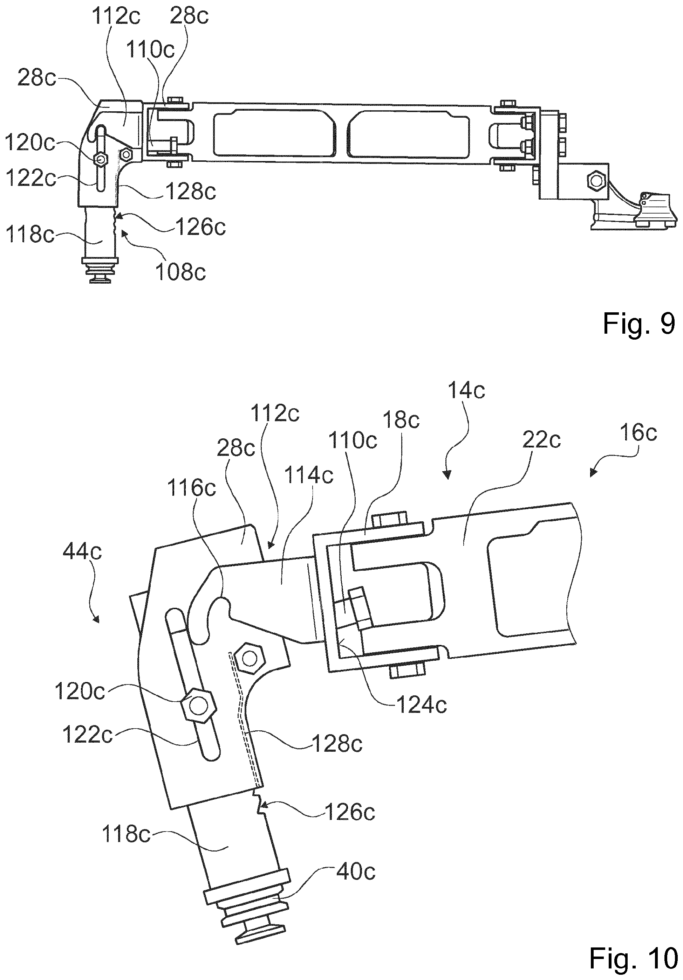

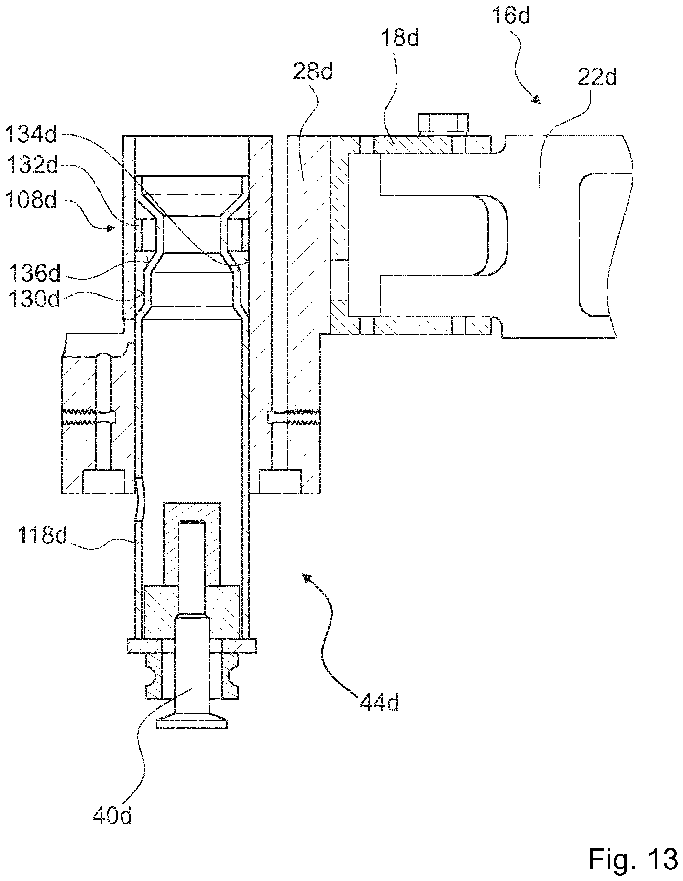

In den Figuren 5 bis 14 sind vier weitere Ausführungsbeispiele gezeigt, die nicht den Ansprüchen entsprechen. Die nachfolgenden Beschreibungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 5 bis 14 ist der Buchstabe a durch die Buchstaben b bis e ersetzt

Die Figuren 5 bis 7 zeigen ein zweites Ausführungsbeispiel einer Flugzeugsitzbefestigungsvorrichtung, die nicht den Ansprüchen entspricht. Die Flugzeugsitzbefestigungsvorrichtung ist Teil einer Flugzeugsitzanordnung 10b. Die Flugzeugsitzanordnung 10b umfasst einen Flugzeugsitz. Der Flugzeugsitz ist als ein Businessclass- oder Firstclass-Flugzeugsitz ausgebildet. Die Flugzeugsitzanordnung 10b umfasst weiter einen Flugzeugsitzaufbau. Der Flugzeugsitzaufbau ist dabei als ein Aufbau ausgebildet, der eine Umhausung für den Flugzeugsitz sowie insbesondere eine Konsole mit Ablagemöglichkeiten und beispielsweise auch einen Fußraum für einen weiteren Flugzeugsitz ausbildet. Der Flugzeugsitzaufbau sowie der Flugzeugsitz selbst sollen hier nicht weiter beschrieben werden und sind in den Figuren auch nicht näher dargestellt. Die Flugzeugsitzanordnung 10b ist dazu vorgesehen, in einem Flugzeug angebracht zu werden. Die Flugzeugsitzanordnung 10b ist insbesondere dazu vorgesehen, in einer Flugzeugkabine aufgeständert zu werden. Die Flugzeugkabine bildet eine Flugzeugstruktur 12b aus. Die Flugzeugstruktur 12b ist als ein Kabinenboden ausgebildet. Zur Anbindung von Flugzeugsitzanordnungen 10b umfasst die Flugzeugkabine in die als Kabinenboden ausgebildete Flugzeugstruktur 12b eingelassene, nicht näher dargestellte Befestigungsschienen.

Die Flugzeugsitzbefestigungsvorrichtung umfasst eine Sitzgrundstruktur 14b. Die Sitzgrundstruktur 14b ist insbesondere Teil der Flugzeugsitzanordnung 10b. Die Sitzgrundstruktur 14b ist dazu vorgesehen, dass zumindest der Flugzeugsitz darauf montiert ist. Die Sitzgrundstruktur 14b ist von einem Grundrahmen 16b gebildet. Der Grundrahmen 16b weist äquivalent zu dem ersten Ausführungsbeispiel zwei Querträger 18b, 20b und zumindest zwei Längsträger 22b auf. Grundsätzlich ist es auch denkbar, dass der Grundrahmen 16b wie in dem ersten Ausführungsbeispiel drei Längsträger 22b aufweist. Die Querträger 18b, 20b sind über die Längsträger 22b miteinander verbunden. Die Querträger 18b, 20b und die Längsträger 22b sind jeweils fest, vorzugsweise insbesondere starr miteinander verbunden. Die Querträger 18b, 20b und die Längsträger 22b sind jeweils insbesondere miteinander verschraubt. In den Figuren ist lediglich der eine Längsträger 22b dargestellt. Der dargestellte Längsträger 22b ist insbesondere als ein äußerer Längsträger 22b ausgebildet, der den Grundrahmen 16b seitlich begrenzt. Der Längsträger 22b ist insbesondere im Bereich einer der beiden Führungsschienen angeordnet, über die der Grundrahmen 16b mit dem Kabinenboden verbunden ist. Der gegenüberliegende, nicht näher dargestellte Längsträger ist gleich ausgebildet und insbesondere auch auf eine gleiche Weise mit dem Kabinenboden, insbesondere der Befestigungsschienen verbunden. Der Grundrahmen 16b bildet einen zumindest im Normalbetrieb im Wesentlichen starren Grundaufbau für den Flugzeugsitz und den Flugzeugsitzaufbau aus.

Der Grundrahmen 16b ist an seiner Rückseite über zwei hintere Fittingelemente 90b mit den Führungsschienen gekoppelt. Die hinteren Fittingelemente 90b sind dazu vorgesehen, kraft- und/oder formschlüssig mit jeweils einer Führungsschiene gekoppelt zu werden. Die hinteren Fittingelemente 90b sind insbesondere dazu vorgesehen, positionssicher mit der jeweiligen Führungsschiene gekoppelt zu werden. Die hinteren Fittingelemente 90b sind in einem montierten Zustand vorzugsweise axial und horizontal in der jeweiligen Führungsschiene fixiert. Die hinteren Fittingelemente 90b sind mit dem hinteren Querträger 20b gekoppelt. Der Grundrahmen 16b umfasst jeweils zwei Kopplungselemente 92b, 94b, über die jeweils ein hinteres Fittingelement 90b mit dem Grundrahmen 16b verbunden ist. Das erste Kopplungselement 92b ist starr mit dem hinteren Querträger 20b verbunden. Vorzugsweise ist das erste Kopplungselement 92b über mehrere Schraubenverbindungen fest und starr mit dem hinteren Querträger 20b verbunden. Das erste Kopplungselement 92b ragt in einem montierten Zustand bis unter den hinteren Querträger 20b hinaus. Das erste Kopplungselement 92b ist vorzugsweise von einem Quader ausgebildet. Das erste Kopplungselement 92b ist vorzugsweise insbesondere aus einem Vollmaterial gebildet. An einem unteren Ende weist das Kopplungselement 92b ein Verbindungselement auf, über das das erste Kopplungselement mit dem zweiten Kopplungselement 94b verbindbar ist. Das Verbindungselement ist als ein Durchgangsloch ausgebildet. Das zweite Kopplungselement 94b ist über eine Schraubenverbindung über das als Durchgangsloch ausgebildete Verbindungselement mit dem ersten Kopplungselement 92b verbunden. Die Schraubenverbindung bildet vorzugsweise eine Drehachse aus, über die in einem Überlastfall eine Ausgleichsbewegung zwischen den beiden Kopplungselementen 92b, 94b und damit dem Grundrahmen 16b und dem hinteren Fittingelement 90b stattfinden kann. Das zweite Kopplungselement 94b ist mit einem vorderen Ende mit dem ersten Kopplungselement 92b verbunden. An einem hinteren Ende ist das zweite Kopplungselement 94b mit dem hinteren Fittingelement 90b gekoppelt. Das zweite Kopplungselement 94b ist über einen Bolzen 96b mit dem hinteren Fittingelement 90b verbunden. Grundsätzlich ist es auch denkbar, dass das zweite Kopplungselement 94b über eine Schraubenverbindung mit dem hinteren Fittingelement 90b verbunden ist. Der Bolzen 96b bildet eine Drehachse aus, über die das zweite Kopplungselement 94b zumindest in einem Übelastfall zu dem Fittingelement 90b verdreht werden kann.

Die Flugzeugsitzbefestigungsvorrichtung umfasst zwei zusätzliche, untere Längsträger 98b. Die zwei zusätzlichen unteren Längsträger 98b sind jeweils im Bereich der beiden Längsträger 22b des Grundrahmens 16b angeordnet. Die Flugzeugsitzbefestigungsvorrichtung umfasst insbesondere je Längsträger 22b des Grundrahmens 16b, der über einer Befestigungsschiene angeordnet ist, einen zusätzlichen, unteren Längsträger 98b. Die zwei zusätzlichen Längsträger 98b sind in montiertem Zustand insbesondere im Bereich der Führungsschienen angeordnet. Der Grundrahmen 16b ist in einem vorderen Bereich mit dem zusätzlichen unteren Längsträger 98b gekoppelt. Der Grundrahmen 16b ist zumindest teilweise auf dem zusätzlichen, unteren Längsträger 98b angeordnet. An einem hinteren Ende weist der zusätzliche, untere Längsträger 98b eine Aufnahme auf, über die er mittels des Bolzens 96b mit dem zweiten Kopplungselement 94b bzw. dem hinteren Fittingelement 90b verbunden ist. Der Längsträger 98b ist vorzugsweise drehbar mit dem zweiten Kopplungselement 94b bzw. dem hinteren Fittingelement 90b gekoppelt.

Die Flugzeugsitzbefestigungsvorrichtung umfasst zwei vordere Sitzfüße 28b. Die Sitzfüße 28b sind insbesondere als Sitzgrundstrukturfüße ausgebildet. Die Sitzfüße 28b sind zur Kopplung der Sitzgrundstruktur 14b mit der Flugzeugstruktur 12b vorgesehen. Die Sitzfüße 28b sind jeweils fest mit jeweils einem der zusätzlichen, unteren Längsträger 98b verbunden. Die Sitzfüße 28b sind an einem vorderen Ende des zusätzlichen, unteren Längsträgers 98b angebunden. Die Sitzfüße 28b sind vorzugsweise starr mit dem zusätzlichen Längsträger 98b verbunden. Die Flugzeugsitzbefestigungsvorrichtung umfasst je Sitzfuß 28b ein Fittingelement 40b. Die Fittingelemente 40b sind zur Kopplung mit den Befestigungsschienen vorgesehen. Die Fittingelemente 40b sind in montiertem Zustand mit einem ersten Ende in der Befestigungsschiene angeordnet. Ein zweites Ende der Fittingelemente 40b ist in montiertem Zustand fest mit einem Sitzfuß 28b gekoppelt. Die Sitzfüße 28b sind jeweils über das Fittingelement 40b mit der entsprechenden Befestigungsschiene verbunden. Über das Fittingelement 40b ist der zusätzliche untere Längsträger 98b fest mit der nicht näher dargestellten Befestigungsschiene verbunden. Der Sitzfuß 28b und damit der zusätzliche untere Längsträger 98b sind in Vertikalrichtung in der Befestigungsschiene fixiert. In Axialrichtung sind das Fittingelement 40b und damit der Sitzfuß 28b und der zusätzliche Längsträger 98b über ein Federelement in der Befestigungsschiene verklemmt und dadurch axial fixiert.

Die Flugzeugsitzbefestigungsvorrichtung umfasst mehrere Ausgleichseinheiten 44b. Die Flugzeugsitzbefestigungsvorrichtung umfasst zwei Ausgleichseinheiten 44b. Insbesondere weist die Flugzeugsitzbefestigungsvorrichtung je zusätzlichem unteren Längsträger 98b jeweils eine Ausgleichseinheit 44b auf. Die Flugzeugsitzbefestigungsvorrichtung weist insbesondere je Längsträger 22b, der über einer Befestigungsschiene angeordnet ist, jeweils eine Ausgleichseinheit 44 auf. Die Ausgleichseinheiten 44b sind dazu vorgesehen, in einem Überlastfall eine Ausgleichsbewegung der Sitzgrundstruktur 14b zuzulassen. Die Ausgleichseinheiten 44b sind insbesondere dazu vorgesehen, in einem Überlastfall eine Ausgleichsbewegung des Grundrahmens 16b zuzulassen. Insbesondere sind die Ausgleichseinheiten 44b dazu vorgesehen, eine Ausgleichsbewegung der Sitzgrundstruktur 14b, insbesondere des Grundrahmens 16b relativ zu dem Kabinenboden zuzulassen. Die Ausgleichseinheiten 44b sind vorzugsweise insbesondere dazu vorgesehen, eine Ausgleichsbewegung zwischen den vorderen Fittingelementen 40b und den hinteren Fittingelementen 90b zuzulassen, insbesondere ohne den Grundrahmen 16b in einer Längsrichtung zu verformen. Die Ausgleichseinheiten 44b sind insbesondere dazu vorgesehen, dass sich eine Sitzgrundstruktur 14b, insbesondere der Grundrahmen 16b, in einem Überlastfall relativ zu dem Kabinenboden bewegen kann. Insbesondere sind die Ausgleichseinheiten 44b dazu vorgesehen, dass sich der Grundrahmen 16b in einem Überlastfall um eine in Querrichtung verlaufende Achse relativ zu dem Kabinenboden verschwenken kann. Die Ausgleichseinheiten 44b sind jeweils zwischen dem einen zusätzlichen unteren Längsträger 98b und dem Grundrahmen 16b angeordnet. Die Ausgleichseinheiten 44b sind insbesondere funktionell jeweils zwischen dem einen zusätzlichen unteren Längsträger 98b und dem Grundrahmen 16b angeordnet. Die Ausgleichseinheiten 44b sind insbesondere in einem vorderen, dem vorderen Sitzfuß 28b zugewandten Bereich des zusätzlichen Längsträgers 98b angeordnet. Die Ausgleichseinheiten 44b sind in einem Überlastfall vorzugsweise insbesondere dazu vorgesehen, eine Höhenverstellung zwischen dem vorderen Fittingelement 40b und dem hinteren Fittingelement 90b zu ermöglichen. Die Ausgleichseinheiten 44b sind dazu vorgesehen, dass sich das vordere Fittingelement 40b, also auch ein vorderer Teil des zusätzlichen Längsträgers 98b relativ zu dem hinteren Fittingelement 90b absenken kann, während der Grundrahmen 16b vorzugsweise im Wesentlichen in einer gleichen, vorzugsweise waagerechten Position bleibt.

Die Ausgleichseinheit 44b umfasst ein Hebelelement 100b. Das Hebelelement 100b ist über eine nicht näher detaillierte Lagerung 102b mit dem zusätzlichen, unteren Längsträger 98b verbunden. Das Hebelelement 100b ist mittels der Lagerung 102b vorzugsweise verschwenkbar mit dem zusätzlichen Längsträger 98b gekoppelt. Vorzugsweise ist das Hebelelement 100b um eine Drehachse exzentrisch drehbar gelagert. Vorteilhaft ist das Hebelelement 100b über eine Kombination aus einer Linearlagerung und einer Drehlagerung mit dem zusätzlichen Längsträger 98b gekoppelt. Das Hebelelement 100b ist insbesondere mit einem unteren Bereich an dem zusätzlichen Längsträger 98b angebunden. Das Hebelelement 100b ist mit einem oberen Ende an den Grundrahmen 16b angebunden. Die Ausgleichseinheit 44b weist einen Halter 104b auf. Der Halter 104b ist fest mit dem Grundrahmen 16b, insbesondere mit dem vorderen Querträger 18b verbunden. Der Halter 104b ist insbesondere an einer Unterseite des vorderen Querträgers 18b fest angebunden. Der Halter 104b weist eine Aufnahme auf, über die das Hebelelement 100b schwenkbar an den Halter 104b angebunden ist. Das Hebelelement 100b ist vorzugsweise insbesondere über einen Bolzen 106b schwenkbar mit dem Halter 104b und damit mit dem Grundrahmen 16b verbunden.

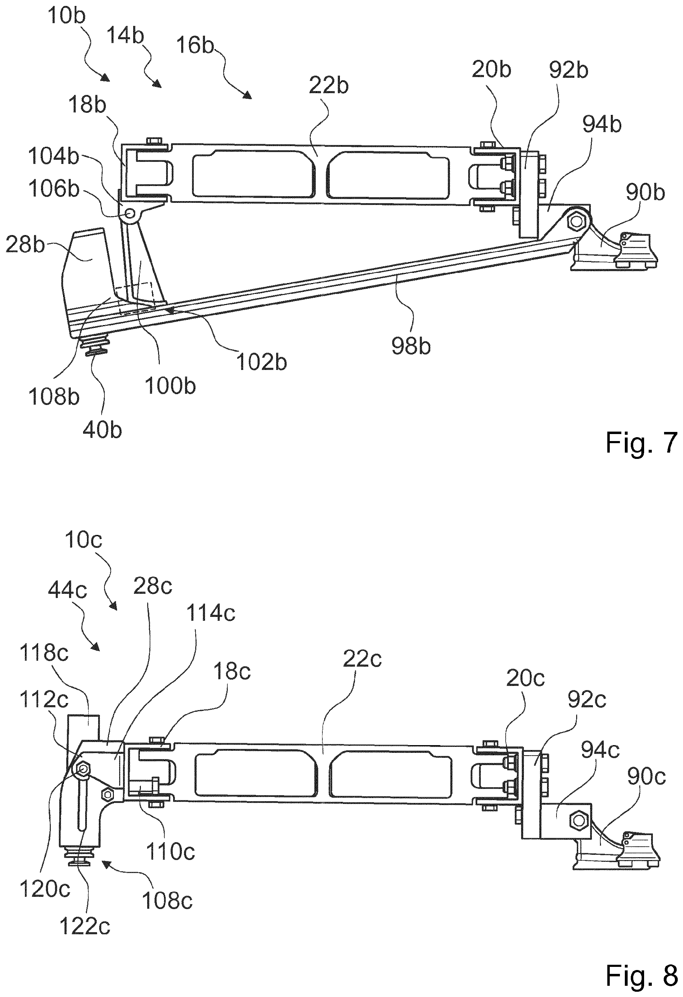

In einem Normalbetriebszustand ist die Ausgleichseinheit 44b in einer Normalstellung. Das Hebelelement 100b liegt in der Normalstellung im Wesentlichen flach auf dem zusätzlichen unteren Längsträger 98b auf (siehe Figur 5). In der Normalstellung ist das Hebelelement 100b im Wesentlichen parallel zu dem zusätzlichen Längsträger 98b ausgerichtet. In der Normalstellung der Ausgleichseinheit 44b ist der Grundrahmen 16b, insbesondere der Längsträger 22b parallel zu dem zusätzlichen Längsträger 98b ausgerichtet. In dem Normalbetriebszustand ist die Ausgleichseinheit 44b durch die Masse der auf dem Grundrahmen 16b aufgebauten Elemente und deren Massenträgheit in der Normalstellung verriegelt. Grundsätzlich wäre es auch denkbar, dass die Ausgleichseinheit 44b eine Verriegelungseinheit aufweist, die die Ausgleichseinheit 44b in dem Normalbetriebszustand zusätzlich bis zu einer definierten Auslösekraft verriegelt. In einen Überlastfall (insbesondere 16G Test) ist die Ausgleichseinheit 44b dazu vorgesehen, in eine Überlaststellung verstellt zu werden. In einer Überlaststellung ist das Hebelelement 100b über die Lagerung 102b zu dem zusätzlichen Längsträger 98b und über den Bolzen 106b und den Halter 104b zu dem Grundrahmen 16b verschwenkbar. Das Hebelelement 100b ist von der Normalstellung bis in eine maximal verschwenkte Stellung verstellbar (siehe Figur 7). In der maximal verschwenkten Stellung des Hebelelements 100b ist das Hebelelement 100b fast orthogonal zu dem zusätzlichen Längsträger 98b ausgerichtet. Das Hebelelement 100b ist stufenlos zwischen der Normalstellung und der maximal verschwenkten Stellung verstellbar. Durch die Verschwenkung des Hebelelements 100b in einer Überlaststellung werden ein Abstand und ein Winkel zwischen dem zusätzlichen Längsträger 98b und dem Grundrahmen 16b erhöht. Dadurch können insbesondere das vordere Fittingelement 40b und ein vorderer Bereich des zusätzlichen Längsträgers 98b abgesenkt werden, beispielsweise durch eine Verformung des Kabinenbodens hervorgerufen, wobei eine Ausrichtung des Grundrahmens 16b im Wesentlichen gleich bleibt.

Die Ausgleichseinheit 44b weist eine Arretierungseinheit 108b auf. Die Arretierungseinheit 108b ist dazu vorgesehen, das Hebelelement 100b in unterschiedlichen Stellungen zwischen seiner Normalstellung und der maximal verstellten Stellung zu arretieren. Die Arretierungseinheit 108b ist insbesondere dazu vorgesehen, eine Rückstellung des Hebelelements 100b nach einer Verstellung aus der Normalstellung in Richtung der maximal verschwenkbaren Stellung zurück in seine Normalstellung zu verhindern. Zur Arretierung des Hebelelements 100b weist die Arretierungseinheit 108b eine nicht näher dargestellte Verzahnung und ein Eingriffselement auf, das in unterschiedlichen Stelllungen des Hebelelements 100b in unterschiedliche Zähne der Verzahnung eingreifen kann, um das Hebelelement 100b so zu arretieren. Es ist vorzugsweise sowohl denkbar, dass die Verzahnung von dem Hebelelement 100b und das Eingriffselement von dem zusätzlichen Längsträger 98b ausgebildet ist, oder dass die Verzahnung von dem zusätzlichen Längsträger 98b und das Eingriffselement von dem Hebelelement 100b ausgebildet ist. Das Hebelelement 100b ist vorzugsweise im Wesentlichen stufenlos zwischen seiner Normalstellung und seiner maximal verschwenkten Stellung mittels der Arretierungseinheit 108b arretierbar. Dabei ist unter im Wesentlichen stufenlos arretierbar insbesondere gemeint, dass eine Arretierung des Hebelelements 100b aus jeder beliebigen Stellung zwischen der Normalstellung und der maximal verschwenkten Stellung nach einer weiteren Verschwenkung von maximal 3 Grad, vorzugsweise maximal 1 Grad eintritt.

Die Figuren 8 bis 10 zeigen ein drittes Ausführungsbeispiel einer Flugzeugsitzbefestigungsvorrichtung, die nicht den Ansprüchen entspricht. Die Flugzeugsitzbefestigungsvorrichtung ist Teil einer Flugzeugsitzanordnung 10c. Die Flugzeugsitzanordnung 10c umfasst einen Flugzeugsitz. Der Flugzeugsitz ist als ein Businessclass- oder Firstclass-Flugzeugsitz ausgebildet. Die Flugzeugsitzanordnung 10c umfasst weiter einen Flugzeugsitzaufbau. Der Flugzeugsitzaufbau ist dabei als ein Aufbau ausgebildet, der eine Umhausung für den Flugzeugsitz sowie insbesondere eine Konsole mit Ablagemöglichkeiten und beispielsweise auch einen Fußraum für einen weiteren Flugzeugsitz ausbildet. Der Flugzeugsitzaufbau sowie der Flugzeugsitz selbst sollen hier nicht weiter beschrieben werden und sind in den Figuren auch nicht näher dargestellt. Die Flugzeugsitzanordnung 10c ist dazu vorgesehen, in einem Flugzeug angebracht zu werden. Die Flugzeugsitzanordnung 10c ist insbesondere dazu vorgesehen, in einer Flugzeugkabine aufgeständert zu werden. Die Flugzeugkabine bildet eine Flugzeugstruktur 12c aus. Die Flugzeugstruktur 12c ist als ein Kabinenboden ausgebildet. Zur Anbindung von Flugzeugsitzanordnungen 10c umfasst die Flugzeugkabine in die als Kabinenboden ausgebildete Flugzeugstruktur 12c eingelassene, nicht näher dargestellte Befestigungsschienen.

Die Flugzeugsitzbefestigungsvorrichtung umfasst eine Sitzgrundstruktur 14c. Die Sitzgrundstruktur 14c ist insbesondere Teil der Flugzeugsitzanordnung 10c. Die Sitzgrundstruktur 14c ist dazu vorgesehen, dass zumindest der Flugzeugsitz darauf montiert ist. Die Sitzgrundstruktur 14c ist von einem Grundrahmen 16c gebildet. Der Grundrahmen 16c weist äquivalent zu dem ersten Ausführungsbeispiel zwei Querträger 18c, 20c und zumindest zwei Längsträger 22c auf. Die Querträger 18c, 20c und die Längsträger 22c sind jeweils fest, vorzugsweise insbesondere starr miteinander verbunden. Die Querträger 18c, 20c und die Längsträger 22c sind jeweils insbesondere miteinander verschraubt. In den Figuren ist lediglich der eine Längsträger 22c dargestellt.

Der Grundrahmen 16c ist an seiner Rückseite über zwei hintere Fittingelemente 90c mit den Führungsschienen gekoppelt. Die hinteren Fittingelemente 90c sind dazu vorgesehen, kraft- und/oder formschlüssig mit jeweils einer Führungsschiene gekoppelt zu werden. Die hinteren Fittingelemente 90c sind insbesondere dazu vorgesehen, positionssicher mit der jeweiligen Führungsschiene gekoppelt zu werden. Die hinteren Fittingelemente 90c sind in einem montierten Zustand vorzugsweise axial und horizontal in der jeweiligen Führungsschiene fixiert. Die hinteren Fittingelemente 90c sind mit dem hinteren Querträger 20c gekoppelt. Der Grundrahmen 16c umfasst jeweils zwei Kopplungselemente 92c, 94c, über die jeweils ein hinteres Fittingelement 90c mit dem Grundrahmen 16c verbunden ist. Das hintere Fittingelement 90c ist äquivalent zu dem zweiten Ausführungsbeispiel mit dem Grundrahmen 16c verbunden. Die Kopplungselemente 92c, 94c sind ebenfalls im Wesentlichen gleich ausgebildet wie diese aus dem zweiten Ausführungsbeispiel.

Die Flugzeugsitzbefestigungsvorrichtung umfasst zwei vordere Sitzfüße 28c. Die Sitzfüße 28c sind insbesondere als Sitzgrundstrukturfüße ausgebildet. Die Sitzfüße 28c sind zur Kopplung der Sitzgrundstruktur 14c mit der Flugzeugstruktur 12c vorgesehen. Die Sitzfüße 28c sind jeweils mit dem vorderen Querträger 18c verbunden. Die Flugzeugsitzbefestigungsvorrichtung umfasst je Sitzfuß 28c ein Fittingelement 40c. Die Fittingelemente 40c sind zur Kopplung mit den Befestigungsschienen vorgesehen. Die Fittingelemente 40c sind in montiertem Zustand mit einem ersten Ende in der Befestigungsschiene angeordnet. Ein zweites Ende der Fittingelemente 40c ist in montiertem Zustand fest mit einem Sitzfuß 28c gekoppelt.

Die Flugzeugsitzbefestigungsvorrichtung umfasst mehrere Ausgleichseinheiten 44c. Die Flugzeugsitzbefestigungsvorrichtung umfasst zwei Ausgleichseinheiten 44c. Insbesondere weist die Flugzeugsitzbefestigungsvorrichtung je Sitzfuß 28c eine Ausgleichseinheit 44c auf. Die Ausgleichseinheiten 44c bilden eine Anbindung des Fittingelements 40c und des Sitzfußes 28c an den Grundrahmen 16c aus. Vorzugsweise sind die Ausgleichseinheiten in eine Anbindung des Fittingelements 40c und des Sitzfußes 28c an den Grundrahmen 16c integriert. Die Ausgleichseinheiten 44c sind dazu vorgesehen, in einem Überlastfall eine Ausgleichsbewegung der Sitzgrundstruktur 14c zuzulassen. Die Ausgleichseinheiten 44c sind insbesondere dazu vorgesehen, in einem Überlastfall eine Ausgleichsbewegung des Grundrahmens 16c zuzulassen. Insbesondere sind die Ausgleichseinheiten 44c dazu vorgesehen, eine Ausgleichsbewegung der Sitzgrundstruktur 14c, insbesondere des Grundrahmens 16c, relativ zu dem Kabinenboden zuzulassen. Die Ausgleichseinheiten 44c sind jeweils funktionell zwischen dem Fittingelement 40c und dem Grundrahmen 16c angeordnet.

Die Sitzfüße 28c sind in einem Normalbetriebszustand jeweils über ein Halteelement 112c mit dem Querträger 18c verbunden. Das Halteelement 112c ist Teil der Ausgleichseinheit 44c Das Halteelement 112c ist fest mit dem vorderen Querträger 18c verbunden. Das Halteelement 112c weist zwei voneinander beabstandete Haltelaschen 114c auf, zwischen denen der Sitzfuß 28c angeordnet ist. Die Haltelaschen 114c bilden jeweils eine Formschlussaufnahme 116c aus. Die Formschlussaufnahmen 116c sind dazu vorgesehen, dass ein Bolzen in einem Normalbetriebszustand von ihnen formschlüssig gehalten werden kann. Der Sitzfuß 28c umfasst eine Befestigungshülse 118c. Die Befestigungshülse 118c ist Teil der Ausgleichseinheit 44c. Die Befestigungshülse 118c ist dazu vorgesehen, ein vorderes Fittingelement 40c an den Sitzfuß 28c anzubinden. Das vordere Fittingelement 40c ist an einem unteren Ende fest in die Befestigungshülse 118c eingebracht. Das Fittingelement 40c ragt mit einem unteren Ende, welches zur Kopplung mit der Befestigungsschiene vorgesehen ist, aus dem unteren Ende der Befestigungshülse 118c heraus.

Die Befestigungshülse 118c ist in dem Sitzfuß 28c angebunden. Die Befestigungshülse 118c ist vorzugsweise insbesondere axial verschiebbar in dem Sitzfuß 28c gelagert. Die Befestigungshülse 118c ist in einer Aufnahme des Sitzfußes 28c über eine Gleitlagerung gelagert. Die Ausgleichseinheit 44c umfasst einen Haltebolzen 120c. Der Haltebolzen 120c ist fest mit der Befestigungshülse 118c verbunden. Der Haltebolzen 120c ragt seitlich über die Befestigungshülse 118c hinaus. Der Haltebolzen 120c ragt vorzugsweise insbesondere seitlich aus dem Sitzfuß 28c hinaus. Der Sitzfuß 28c weist in seinen zwei Seitenwänden jeweils ein Langloch 122c auf. Der Haltebolzen 120c erstreckt sich durch die beiden Langlöcher 122c. Die Langlöcher 122c erstrecken sich vorzugsweise von einem oberen Bereich des Sitzfußes 28c bis an einen unteren Bereich des Sitzfußes 28c. Durch die Langlöcher 122c ist der Haltebolzen 120c an dem Sitzfuß 28c geführt. Über den Haltebolzen 120c und die Langlöcher 122c ist die Befestigungshülse 118c axial entlang der Langlöcher 122c mit dem Sitzfuß 28c gekoppelt. In einem Normalbetriebszustand ist der Haltebolzen 120c an einem oberen Ende der Langlöcher 122c angeordnet und mittels des Halteelements 112c in dieser Position gesichert. Der Haltebolzen 120c ist in der Normalposition vorzugsweise durch die Formschlussaufnahmen 116c des Halteelements 112c formschlüssig fixiert. Durch die formschlüssige Fixierung des Haltebolzens 120c an einem oberen Ende der Langlöcher 122c ist die Befestigungshülse 118c und dadurch der gesamte Sitzfuß 28c in dem Normalbetriebszustand betriebssicher an dem Grundrahmen 16c fixiert.

Die Ausgleichseinheit 44c umfasst je Sitzfuß 28c eine Bolzenverbindung, über die die Sitzfüße 28c zusätzlich mit dem Grundrahmen 16c, insbesondere dem vorderen Querträger 18c verbunden sind. Die Sitzfüße 28c sind jeweils über einen Bolzen 110c mit dem Querträger 18c gekoppelt. Jeder Bolzen 110c ist vorzugsweise insbesondere zu einer Sicherung eines Sitzfußes 28c an dem Grundrahmen 16c in einer Auslösestellung der Ausgleichseinheit 44c vorgesehen. Ein grundrahmenseitiger Anschlag 124c des Bolzens 110c ist in der Normalstellung vorzugsweise beabstandet zu dem Grundrahmen 16c angeordnet. In einem Auslösefall kann sich der Sitzfuß 28c von dem Grundrahmen 16c lösen, bis der grundrahmenseitige Anschlag 124c des Haltebolzens 120c an dem Grundrahmen 16c anschlägt. In einem Normalbetriebszustand ist der Sitzfuß 28c über die Formschlussverbindung des Haltebolzens 120c mit der Formschlussaufnahme 116c des Halteelements 112c und dem Bolzen 110c an dem Grundrahmen 16c fixiert. In dem Normalbetriebszustand ist der Bolzen 110c über die Normalkräfte, insbesondere Gewichtskräfte, die in dem Normalbetriebszustand wirken, mit dem Sitzfuß 28c und dem vorderen Querträger 18c verspannt und fixiert diese so zueinander.

Die Ausgleichseinheit 44c weist eine Arretierungseinheit 108c auf. Die Arretierungseinheit 108c ist dazu vorgesehen, die Befestigungshülse 118c in unterschiedlichen Stellungen relativ zu dem Sitzfuß 28c zu arretieren. Die Arretierungseinheit 108c ist insbesondere dazu vorgesehen, die Befestigungshülse 118c in unterschiedlich weit aus dem Sitzfuß 28c heraus gezogenen Stellungen zu arretieren. Die Arretierungseinheit 108c weist mehrere, in eine Außenfläche der Befestigungshülse 118c eingebrachte Nuten 126c auf. Die Nuten 126c sind in Vertikalrichtung der Befestigungshülse 118c beabstandet zueinander in die Befestigungshülse 118c eingebracht. Die Arretierungseinheit 108c weist ein Blattfederelement 128c auf, das dazu vorgesehen ist, zur Arretierung der Befestigungshülse 118c in unterschiedlichen Stellungen in die unterschiedlichen Nuten 126c der Arretierungseinheit 108c einzugreifen.

In einem Überlastfall sind die Formschlussaufnahmen 116c des Halteelements 112c dazu vorgesehen, plastisch verformt zu werden, insbesondere aufzubrechen. Die Formschlussaufnahmen 116c des Halteelements 112c sind insbesondere dazu vorgesehen, ab einer definierten Grenzlast aufzubrechen. Durch das Aufbrechen der Formschlussaufnahmen 116c des Halteelements 112c wird der Haltebolzen 120c freigegeben. In einem freigegebenen Zustand kann der Haltebolzen 120c in den entsprechenden Langlöchern 122c des Sitzfußes 28c entlanggleiten. Dadurch kann sich die Befestigungshülse 118c samt dem darin befestigten Fittingelement 40c relativ zu dem Sitzfuß 28c bewegen, insbesondere nach unten aus diesem herausgefahren werden. Dadurch kann mittels der Ausgleichseinheit 44c ein Abstand zwischen dem Fittingelement 40c und dem Grundrahmen 16c vergrößert werden. Dadurch kann beispielsweise eine Verformung des Kabinenbodens ausgeglichen werden, insbesondere indem sich die vorderen Fittingelemente 40c relativ zu den hinteren Fittingelementen 90c absenken.

Dadurch kann eine Krafteinleitung und/oder Verformung der Sitzgrundstruktur 14c, insbesondere des Grundrahmens 16c in einem Überlastfall verhindert werden. Sind die Befestigungshülse 118c und das vordere Fittingelement 40c durch die einwirkenden Kräfte in dem Überlastfall ausgelenkt worden und fallen diese Kräfte weg, arretiert die Arretierungseinheit 108c die Befestigungshülse 118c und damit auch die vorderen Fittingelemente 40c relativ zu dem Grundrahmen 16c. Über die Arretierungseinheit 108c können insbesondere auch Kräfte in einem 16G Crashtest übertragen werden und insbesondere von der Sitzgrundstruktur 14c in den Kabinenboden eingeleitet werden.

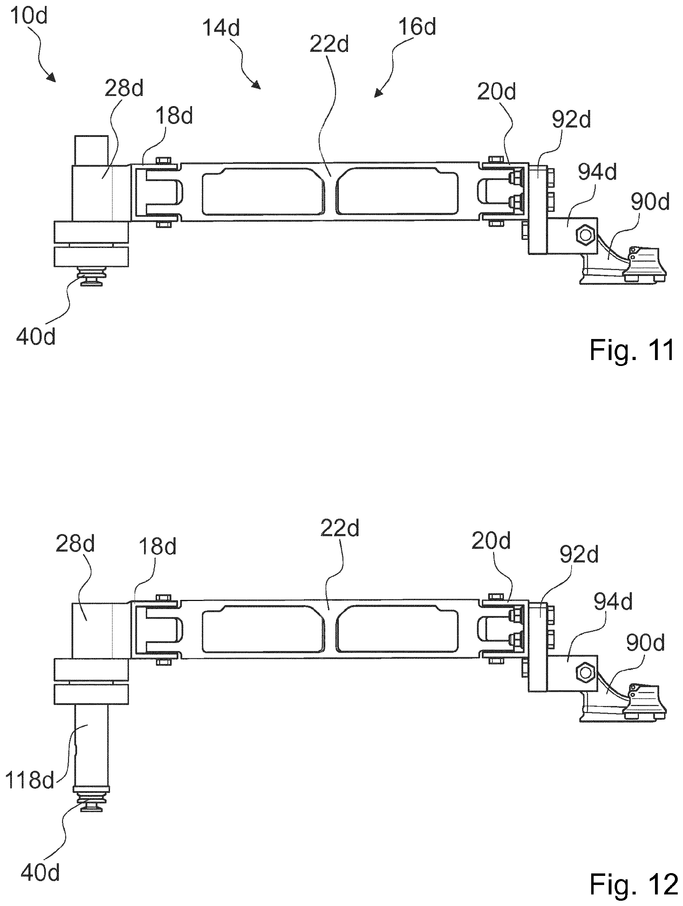

Die Figuren 11 bis 13 zeigen ein viertes Ausführungsbeispiel einer Flugzeugsitzbefestigungsvorrichtung, die nicht den Ansprüchen entspricht.

Die Flugzeugsitzbefestigungsvorrichtung ist Teil einer Flugzeugsitzanordnung 10d. Die Flugzeugsitzanordnung 10d umfasst einen Flugzeugsitz. Der Flugzeugsitz ist als ein Businessclass- oder Firstclass-Flugzeugsitz ausgebildet. Die Flugzeugsitzanordnung 10d umfasst weiter einen Flugzeugsitzaufbau. Der Flugzeugsitzaufbau ist dabei als ein Aufbau ausgebildet, der eine Umhausung für den Flugzeugsitz sowie insbesondere eine Konsole mit Ablagemöglichkeiten und beispielsweise auch einen Fußraum für einen weiteren Flugzeugsitz ausbildet. Der Flugzeugsitzaufbau sowie der Flugzeugsitz selbst sollen hier nicht weiter beschrieben werden und sind in den Figuren auch nicht näher dargestellt. Die Flugzeugsitzanordnung 10d ist dazu vorgesehen, in einem Flugzeug angebracht zu werden. Die Flugzeugsitzanordnung 10d ist insbesondere dazu vorgesehen, in einer Flugzeugkabine aufgeständert zu werden. Die Flugzeugkabine bildet eine Flugzeugstruktur 12d aus. Die Flugzeugstruktur 12d ist als ein Kabinenboden ausgebildet. Zur Anbindung von Flugzeugsitzanordnungen 10d umfasst die Flugzeugkabine in die als Kabinenboden ausgebildete Flugzeugstruktur 12d eingelassene, nicht näher dargestellte Befestigungsschienen. Die Flugzeugsitzbefestigungsvorrichtung umfasst eine Sitzgrundstruktur 14d. Die Sitzgrundstruktur 14d ist insbesondere Teil der Flugzeugsitzanordnung 10d. Die Sitzgrundstruktur 14d ist dazu vorgesehen, dass zumindest der Flugzeugsitz darauf montiert ist. Die Sitzgrundstruktur 14d ist von einem Grundrahmen 16d gebildet. Der Grundrahmen 16d weist äquivalent zu dem ersten Ausführungsbeispiel zwei Längsträger 18d, 20d und zumindest zwei Längsträger 22d auf. Die Querträger 18d, 20d und die Längsträger 22d sind jeweils fest, vorzugsweise insbesondere starr miteinander verbunden. Die Querträger 18d, 20d und die Längsträger 22d sind jeweils insbesondere miteinander verschraubt. In den Figuren ist lediglich der eine Längsträger 22d dargestellt. Der Grundrahmen 16d ist an seiner Rückseite über zwei hintere Fittingelemente 90d mit den Führungsschienen gekoppelt. Die hinteren Fittingelemente 90d sind dazu vorgesehen, kraft- und/oder formschlüssig mit jeweils einer Führungsschiene gekoppelt zu werden. Die hinteren Fittingelemente 90d sind insbesondere dazu vorgesehen, positionssicher mit der jeweiligen Führungsschiene gekoppelt zu werden. Die hinteren Fittingelemente 90d sind in einem montierten Zustand vorzugsweise axial und horizontal in der jeweiligen Führungsschiene fixiert. Die hinteren Fittingelemente 90d sind mit dem hinteren Querträger 20d gekoppelt. Der Grundrahmen 16d umfasst jeweils zwei Kopplungselemente 92d, 94d, über die jeweils ein hinteres Fittingelement 90d mit dem Grundrahmen 16d verbunden ist. Das hintere Fittingelement 90d ist äquivalent zu dem zweiten Ausführungsbeispiel mit dem Grundrahmen 16d verbunden. Die Kopplungselemente 92d, 94d sind ebenfalls im Wesentlichen gleich ausgebildet wie diese aus dem zweiten Ausführungsbeispiel.

Die Flugzeugsitzbefestigungsvorrichtung umfasst zwei vordere Sitzfüße 28d. Die Sitzfüße 28d sind insbesondere als Sitzgrundstrukturfüße ausgebildet. Die Sitzfüße 28d sind zur Kopplung der Sitzgrundstruktur 14d mit einer Flugzeugstruktur 12d vorgesehen. Die Sitzfüße 28d sind jeweils fest mit dem vorderen Querträger 18d verbunden. Die vorderen Sitzfüße 28d sind vorzugsweise mittels einer Schraubverbindung fest mit dem Grundrahmen 16d, insbesondere mit dem vorderen Querträger 18d verbunden. Die Flugzeugsitzbefestigungsvorrichtung umfasst je Sitzfuß 28d ein Fittingelement 40d. Die Fittingelemente 40d sind zur Kopplung mit den Befestigungsschienen vorgesehen. Die Fittingelemente 40d sind in montiertem Zustand mit einem ersten Ende in der Befestigungsschiene angeordnet. Ein zweites Ende der Fittingelemente 40d ist in montiertem Zustand fest mit einem Sitzfuß 28d gekoppelt.

Die Flugzeugsitzbefestigungsvorrichtung umfasst mehrere Ausgleichseinheiten 44d. Die Flugzeugsitzbefestigungsvorrichtung umfasst zwei Ausgleichseinheiten 44d. Insbesondere weist die Flugzeugsitzbefestigungsvorrichtung je Sitzfuß 28d eine Ausgleichseinheit 44d auf. Die Ausgleichseinheiten 44d bilden eine Anbindung des Fittingelements 40d und des Sitzfußes 28d an den Grundrahmen 16d aus. Vorzugsweise sind die Ausgleichseinheiten 44d in eine Anbindung des Fittingelements 40d und des Sitzfußes 28d an den Grundrahmen 16d integriert. Die Ausgleichseinheiten 44d sind dazu vorgesehen, in einem Überlastfall eine Ausgleichsbewegung der Sitzgrundstruktur 14d zuzulassen. Die Ausgleichseinheiten 44d sind insbesondere dazu vorgesehen, in einem Überlastfall eine Ausgleichsbewegung des Grundrahmens 16d zuzulassen. Insbesondere sind die Ausgleichseinheiten 44d dazu vorgesehen, eine Ausgleichsbewegung der Sitzgrundstruktur 14d, insbesondere des Grundrahmens 16d relativ zu dem Kabinenboden zuzulassen. Die Ausgleichseinheiten 44d sind jeweils funktionell zwischen dem Fittingelement 40d und dem Grundrahmen 16d angeordnet.

Der Sitzfuß 28d umfasst eine Befestigungshülse 118d. Die Befestigungshülse 118d ist Teil der Ausgleichseinheit 44d. Die Befestigungshülse 118d ist dazu vorgesehen, ein vorderes Fittingelement 40d an den Sitzfuß 28d anzubinden. Das vordere Fittingelement 40d ist an einem unteren Ende fest in die Befestigungshülse 118d eingebracht. Das Fittingelement 40d ragt mit einem unteren Ende, welches zur Kopplung mit der Befestigungsschiene vorgesehen ist, aus dem unteren Ende der Befestigungshülse 118d heraus.

Die Befestigungshülse 118d ist in dem Sitzfuß 28d angebunden. Die Befestigungshülse 118d ist vorzugsweise insbesondere axial verschiebbar in dem Sitzfuß 28d gelagert. Die Befestigungshülse 118d ist in einer Aufnahme des Sitzfußes 28d über eine Gleitlagerung gelagert. Im Unterschied zum dritten Ausführungsbeispiel ist die Befestigungshülse 118d dazu vorgesehen, über einen Reibschluss in dem Sitzfuß 28d fixiert zu werden. Die Befestigungshülse 118d weist in einem oberen Bereich eine Reibfläche 130d auf. Die Reibfläche 130d ist von einem Teil eines Außenmantels der Befestigungshülse 118d gebildet. Die Ausgleichseinheit 44d weist ein Reibelement 132d auf. Das Reibelement 132d ist als eine Reibhülse ausgebildet. Das Reibelement 132d ist dazu vorgesehen, zumindest in einem Normalbetriebszustand einen Reibschluss zwischen der Reibfläche 130d der Befestigungshülse 118d und einer Mantelfläche 134d der Aufnahme des Sitzfußes 28d herzustellen, in dem die Befestigungshülse 118d gelagert ist. In einer Normalstellung der Ausgleichseinheit 44d ist das Reibelement 132d im Bereich der Reibfläche 130d der Befestigungshülse 118d angeordnet. In der Normalstellung können Axialkräfte durch einen Reibschluss zwischen der Mantelfläche 134d und dem Reibelement 132d, sowie dem Reibelement 132d und der Reibfläche 134d der Befestigungshülse 118d von dem Sitzfuß 28d in das vordere Fittingelement 40d eingeleitet werden. Durch diese Reibschlussverbindung können Kräfte, die im Normalbetrieb auftreten, von dem Sitzfuß 28d in das Fittingelement 40d, also von dem Grundrahmen 16d in den Sitzboden, abgeleitet werden.

Die Ausgleichseinheit 44d weist eine Arretierungseinheit 108d auf. Die Arretierungseinheit 108d ist dazu vorgesehen, die Befestigungshülse 118d in unterschiedlichen Stellungen relativ zu dem Sitzfuß 28d zu arretieren. Im Unterschied zu dem dritten Ausführungsbeispiel ist die Arretierungseinheit 108d durch einen Reibschluss arretierbar. Die Arretierungseinheit 108d bildet in einem oberen Bereich der Befestigungshülse 118d, insbesondere oberhalb der Reibfläche 130d einen Reibkonus 136d auf. Der Reibkonus 136d läuft nach oben hin schmaler zu. An einem oberen Ende weist der Reibkonus 136d einen Außendurchmesser auf, der kleiner ist als ein Innendurchmesser des als Reibhülse ausgebildeten Reibelements 132d. In einem Überlastfall rutscht das Reibelement 132d durch das Herabbewegen der Befestigungshülse in einen Bereich oberhalb des Reibkonus 136d. Dadurch kann die Befestigungshülse 118d durch die einwirkende Kraft in dem Überlastfall, vorzugsweise ohne gegenwirkende Reibkraft, nach unten aus dem Sitzfuß 28d heraus bewegt werden. Nach Wegfall der Kraft in dem Überlastfall arretiert die Arretierungseinheit 108d die Befestigungshülse 118d durch eine Reibkraft zwischen dem Reibkonus 136d, dem Reibelement 132d und der Mantelfläche 134d. Durch ein kurzes Nach-oben-Bewegen der Befestigungshülse 118d wird das Reibelement 132d durch die Konusfläche 136d der Befestigungshülse nach außen, in Richtung der Mantelfläche 134d der Aufnahme des Sitzfußes 28d gepresst. Dadurch verspannt sich das Reibelement 132d wieder mit der Befestigungshülse 118d und der Aufnahme des Sitzfußes 28d. Dadurch kann nach dem Überlastfall und einer Auslösung der Ausgleichseinheit 44d wieder eine Kraft zwischen dem Sitzfuß 28d und der Befestigungshülse 118d, also insbesondere dem Grundrahmen 16d und dem vorderen Fittingelement 40d übertragen werden, sodass insbesondere auch Kräfte eines Crashtests (16G Test) übertragen werden können.

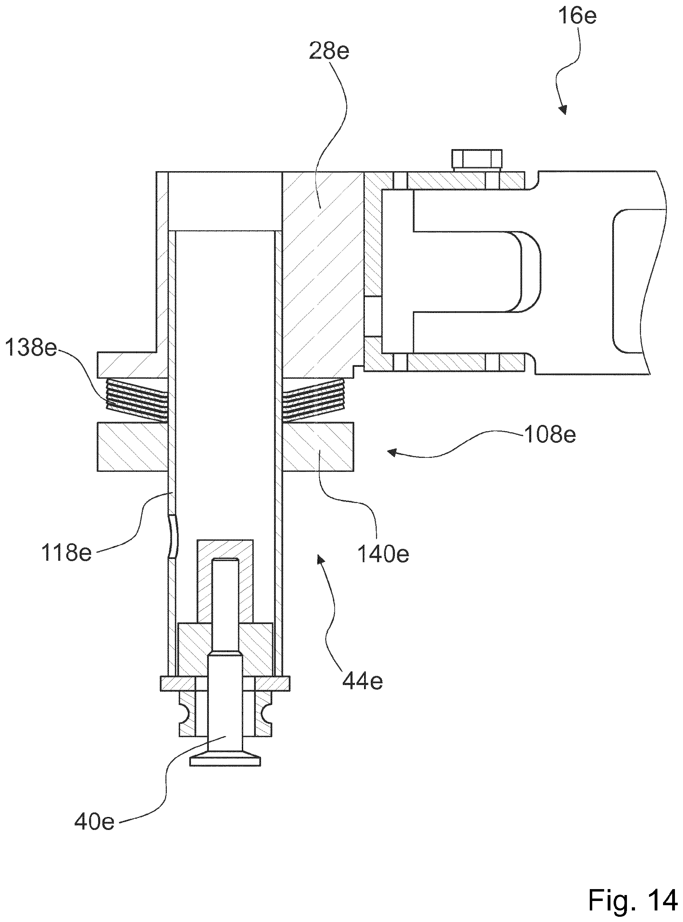

Figur 14 zeigt beispielhaft ein fünftes Ausführungsbeispiel einer Flugzeugsitzbefestigungsvorrichtung, die nicht den Ansprüchen entspricht.

Im Unterschied zu dem vierten Ausführungsbeispiel ist lediglich eine Reibschlussverbindung zwischen einem vorderen Sitzfuß 28e und einer Befestigungshülse 118e für ein vorderes Fittingelement 40e anders ausgebildet. Zur Fixierung der Befestigungshülse 118e in einem Normalbetriebszustand sowie einer Arretierung der Befestigungshülse 118e in einem ausgefahrenen Zustand, weist eine Ausgleichsvorrichtung 44e ein Federelement 138e auf. Das Federelement 138e ist als ein Federpaket ausgebildet. Das Federelement 138e ist in einem unteren Bereich des Sitzfußes 28e angeordnet. Das Federelement 138e ist zwischen einem unteren Ende des Sitzfußes 28e und einem mit dem Sitzfuß 28e fest verbundenen Gegenhalteelement 140e eingeklemmt. Das Federelement 138e weist eine Durchgangsloch auf. Durch das Durchgangsloch ist in einem montierten Zustand die Befestigungshülse 118e geführt. Die Befestigungshülse 118e ist in einem Reibkontakt mit dem Federelement 138e. Über den Reibschluss zwischen dem Federelement 138e und der Befestigungshülse 118e kann in einem Normalbetriebszustand eine während des Betriebes auftretende Normalkraft reibschlüssig übertragen werden. In einem Überlastfall verformt sich das Federelement 138e durch eine auf die Befestigungshülse nach unten wirkende Kraft derart, dass eine Normalkraft auf die Befestigungshülse 118e verringert wird und eine Reibkraft zwischen der Befestigungshülse 118e und dem Federelement 138e so gering wird, dass sich die Befestigungshülse 118e nach unten bewegen kann. Dadurch kann sich die Befestigungshülse 118e in einem Überlastfall nach unten bewegen und die Ausgleichseinheit 44e so einen Abstand zwischen einem vorderen Fittingelement 40e und einem Grundrahmen 16e erhöhen. Bei einer nach oben in Richtung des Sitzfußes 28e auf die Befestigungshülse 118e wirkenden Kraft verformt sich das Federelement 138e derart, dass eine Normalkraft auf die Befestigungshülse 118e erhöht und damit eine Reibkraft zwischen dem Federelement 138e und der Befestigungshülse 118e erhöht wird. Dadurch kann eine Arretierungseinheit 108e der Ausgleichseinheit 44e ebenfalls von dem Federelement 138e gebildet werden. Eine grundsätzliche Funktion der Ausgleichseinheit 44e entspricht den Ausgleichseinheiten 44e der Ausführungsbeispiele zwei bis vier und soll deshalb hier nicht nochmals näher beschrieben werden.

### Bezugszeichen

- 10: Flugzeugsitzanordnung
- 12: Flugzeugstruktur
- 14: Sitzgrundstruktur
- 16: Grundrahmen
- 18: Querträger
- 20: Querträger
- 22: Längsträger
- 24: Längsträger
- 26: Längsträger
- 28: Sitzfuß
- 30: Sitzfuß
- 32: Sitzfußanbindung
- 34: Sitzfußanbindung
- 36: Befestigungsschiene
- 38: Befestigungsschiene
- 40: Fittingelement
- 42: Fittingelement
- 44: Ausgleichseinheit
- 46: Ausgleichseinheit
- 48: Drehzapfen
- 50: Rotationsachse
- 52: Verbindungsmittel
- 54: Verbindungsmittel
- 56: Verbindungsmittel
- 58: Verbindungsmittel
- 60: Durchgangsloch
- 68: Aufnahmeloch
- 70: Durchgangsloch
- 72: Durchgangsloch
- 74: Durchgangsloch
- 76: Durchgangsloch
- 78: Positionierungseinheit
- 80: Halteplatte
- 82: Durchgangsloch
- 84: Durchgangsloch
- 86: Durchgangsloch
- 88: Durchgangsloch
- 90: Fittingelement
- 92: Kopplungselement
- 94: Kopplungselement
- 96: Bolzen
- 98: Längsträger
- 100: Hebelelement
- 102: Lagerung
- 104: Halter
- 106: Bolzen
- 108: Arretierungseinheit
- 110: Bolzen
- 112: Halteelement
- 114: Haltelaschen
- 116: Formschlussaufnahme
- 118: Befestigungshülse
- 120: Haltebolzen
- 122: Langloch
- 124: Anschlag
- 126: Nut
- 128: Blattfederelement
- 130: Reibfläche
- 132: Reibelement
- 134: Mantelfläche
- 136: Reibkonus
- 138: Federelement
- 140: Gegenhalteelement

## Patentansprüche

1. Flugzeugsitzbefestigungsvorrichtung zur Befestigung wenigstens eines Teils eines Flugzeugsitzes an zumindest einer, an einer Flugzeugstruktur (12a) befestigten Befestigungsschiene (36a, 38a), wobei die Flugzeugsitzbefestigungsvorrichtung eine Sitzgrundstruktur (14a) umfasst,
die dazu vorgesehen ist, dass zumindest der Flugzeugsitz darauf montiert ist, wobei die Sitzgrundstruktur (14a) von einem Grundrahmen (16a) gebildet ist, der zumindest zwei Querträger (18a, 20a) und zumindest zwei Längsträger (22a, 24a, 26a) aufweist, die fest miteinander verbunden sind, wobei die Querträger (18a, 20a) über die Längsträger (22a, 24a , 26a) miteinander verbunden sind, wobei der Grundrahmen (16a) eine Grundstruktur ausbildet, die dazu vorgesehen ist, dass der Flugzeugsitz und ein Flugzeugsitzaufbau fest darauf montierbar sind, mit wenigstens einem Sitzfuß (28a), der an der Sitzgrundstruktur (14a) angebunden ist, und mit zumindest einem Fittingelement (40a) das an dem Sitzfuß (28a) angebunden und zumindest dazu vorgesehen ist, mit der Befestigungsschiene (36a, 38a) gekoppelt zu werden, wobei
wenigstens eine Ausgleichseinheit (44a), die an der Sitzgrundstruktur (14a) und dem Sitzfuß (28a, 30a) angeordnet und dazu vorgesehen ist, zumindest in einem Überlastfall zumindest eine Ausgleichsbewegung der Sitzgrundstruktur (14a) zuzulassen, wobei die Ausgleichseinheit (44a, 46a) wenigstens einen zentralen Drehzapfen (48a) aufweist, mittels dessen der Sitzfuß (28a, 30a) positionsfest mit der Sitzgrundstruktur (14a) gekoppelt ist,
wobei der Drehzapfen (48a) eine Rotationsachse (50a) ausbildet, über die der Sitzfuß (28a) relativ zu dem Grundrahmen (16a) verschwenkbar ist und **dadurch gekennzeichnet, dass** die Ausgleichseinheit (44a) wenigstens ein exzentrisch zu dem Drehzapfen (48a) angeordnetes Verbindungsmittel (52a, 54a, 56a, 58a) aufweist, das zumindest in einem von der Sitzgrundstruktur (14a) ausgebildeten Durchgangsloch (70a, 72a, 74a, 76a) und in einem von dem Sitzfuß (28a, 30a) ausgebildeten Durchgangsloch (60a) geführt ist.

2. Flugzeugsitzbefestigungsvorrichtung nach Anspruch 1, **dadurch gekennzeichnet, dass** die Ausgleichseinheit (44a, 46a) in einer Sitzfußanbindung (32a, 34a) integriert ist, über die der wenigstens eine Sitzfuß (28a, 30a) an die Sitzgrundstruktur (14a) angebunden ist.

3. Flugzeugsitzbefestigungsvorrichtung nach einem der vorhergehenden Ansprüche, **dadurch gekennzeichnet, dass** die Ausgleichseinheit (44a, 46a) dazu vorgesehen ist, zumindest in einem Überlastfall zumindest eine Rotation des Sitzfußes (28a, 30a) um eine Rotationsachse (50a) relativ zu der Sitzgrundstruktur (14a) zuzulassen.

4. Flugzeugsitzbefestigungsvorrichtung nach einem der vorhergehenden Ansprüche, **dadurch gekennzeichnet, dass** eine von der Ausgleichseinheit (44a, 46a) durchgeführte Ausgleichsbewegung zumindest im Wesentlichen frei von einer elastischen und/oder plastischen Verformung ist.

5. Flugzeugsitzbefestigungsvorrichtung nach einem der vorhergehenden Ansprüche, **dadurch gekennzeichnet, dass** die Ausgleichseinheit (44a, 46a) wenigstens eine Positionierungseinheit (78a) aufweist, die das zumindest eine Verbindungsmittel (52a, 54a, 56a, 58a) zumindest in einem Normalbetriebszustand in dem Durchgangsloch (70a, 72a, 74a, 76a) in einer Normalposition positioniert.

6. Flugzeugsitzbefestigungsvorrichtung nach Anspruch 5, **dadurch gekennzeichnet, dass** die Positionierungseinheit (78a) das Verbindungsmittel (52a, 54a, 56a, 58a) durch eine Vorspannkraft kraftschlüssig in der Normalposition hält.

7. Flugzeugsitz mit einer Flugzeugsitzbefestigungsvorrichtung nach einem der vorhergehenden Ansprüche 1 bis 6.

## Claims

1. Aircraft seat fixation device for a fixation at least of a portion of an aircraft seat on at least one fixation rail (36a, 38a) that is fixated on an aircraft structure (12a; 12b; 12c; 12d; 12e),
the aircraft seat fixation device comprising a seat base structure (14a) which is configured such that at least the aircraft seat is mounted thereon,
the seat base structure (14a) being formed by a base frame (16a) comprising at least two transversal beams (18a, 20a) and at least two longitudinal beams 22a, 24a, 26a), which are fixedly connected with one another,
wherein the transversal beams (18a, 20a) are connected to one another via the longitudinal beams (22a, 24a, 26a),
wherein the base frame (16a) forms a basic structure which is configured such that the aircraft seat and an aircraft seat superstructure are fixedly mountable thereon,
with at least one seat foot (28a), which is connected to the seat base structure (14a), and with at least one fitting element (40a) which is connected to the seat foot (28a) and is at least configured to be coupled with the fixation rail (36a, 38a), wherein at least one compensation unit (44a) is arranged on the seat base structure (14a) and on the seat foot (28a) and is configured to permit, at least in an overload case, at least one compensation movement of the seat base structure (14),
the compensation unit (44a, 46a) comprising at least one central swivel pin (48a) by which the seat foot (28a, 30a) is coupled with the seat base structure (14a) in a positionally fixed manner,
wherein the swivel pin (48a) forms a rotation axle (50a), via which the seat foot (28a) is pivotable relative to the base frame (16a), and
**characterized in that** the compensation unit (44a) comprises at least one connection member (52a, 54a, 56a, 58a), which is arranged eccentrically to the swivel pin (48a) and is arranged at least in a through hole (70a, 72a, 74a, 76a) formed by the seat base structure (14a) and in a through hole (60a) formed by the seat foot (28a, 30a).

2. Aircraft seat fixation device according to claim 1,
**characterized in that** the compensation unit (44a, 46a) is integrated in a seat foot connection (32a, 34a), via which the at least one seat foot (28a, 30a) is connected to the seat base structure (14a).

3. Aircraft seat fixation device according to any one of the preceding claims,
**characterized in that** the compensation unit (44a, 46a) is configured, at least in an overload case, to permit at least a rotation of the seat foot (28a, 30a) around a rotation axle (50a) relative to the seat base structure (14a).

4. Aircraft seat fixation device according to any one of the preceding claims,
**characterized in that** a compensation movement executed by the compensation unit (44a, 46a) is at least substantially free of elastic and/or plastic deformation.

5. Aircraft seat fixation device according to any one of the preceding claims,
**characterized in that** the compensation unit (44a, 46a) comprises at least one positioning unit (78a) which, at least in a normal operation state, positions the at least one connection member (52a, 54a, 56a, 58a) in the through hole (70a, 72a, 74a, 76a) in a normal position.

6. Aircraft seat fixation device according to claim 5,
**characterized in that** the positioning unit (78a) holds the connection member (52a, 54a, 56a, 58a) in the normal position by a preload force in a force-fit manner.

7. Aircraft seat
with an aircraft seat fixation device according to any one of the preceding claims 1 to 6.

## Revendications

1. Dispositif à fixation de siège d'avion pour la fixation au moins d'une partie d'un siège d'avion sur au moins un rail de fixation (36a, 38a) fixé à une structure d'avion (12a),
le dispositif à fixation de siège d'avion comprenant une structure de base de siège (14a) qui est conçue pour qu'au moins le siège d'avion soit monté sur celle-ci, où la structure de base de siège (14a) est formée par un cadre de base (16a) comportant au moins deux traverses (18a, 20a) et au moins deux longerons (22a, 24a, 26a) qui sont reliés fixement l'un à l'autre, où les traverses (18a, 20a) sont reliées l'une à l'autre par le biais des longerons (22a, 24a, 26a),
où le cadre de base (16a) forme une structure de base qui est prévue pour que le siège d'avion et une superstructure de siège d'avion puissent être montés fixement sur celle-ci,
comprenant au moins un pied de siège (28a) relié à la structure de base de siège (14a),
et comprenant au moins un élément de raccord (40a) qui est relié au pied de siège (28a) et est conçu au moins pour être couplé au rail de fixation (36a, 38a), où au moins une unité de compensation (44a) est disposée sur la structure de base de siège (14a) et sur le pied de siège (28a, 30a) et qui est prévue pour permettre - au moins dans un cas de surcharge - au moins un mouvement de compensation de la structure de base de siège (14a), l'unité de compensation (44a, 46a) comprenant au moins un tenon-pivot central (48a) moyennant lequel le pied de siège (28a, 30a) est couplé fixement en position à la structure de base de siège (14a),
où le tenon-pivot (48a) forme un arbre rotatif (50a) par le biais duquel le pied de siège (28a) peut être pivoté par rapport au cadre de base (16a), et
**caractérisé en ce que** l'unité de compensation (44a) comprend au moins un moyen de liaison (52a, 54a, 56a, 58a) disposé excentriquement par rapport au tenon-pivot (48a) et guidé au moins dans un trou de passage (70a, 72a, 74a, 76a) formé par la structure de base de siège (14a) et dans un trou de passage (60a) formé par le pied de siège (28a, 30a).

2. Dispositif à fixation de siège d'avion selon la revendication 1,
**caractérisé en ce que** l'unité de compensation (44a, 46a) est intégrée dans une liaison de pied de siège (32a, 34a) par le biais de laquelle l'au moins un pied de siège (28a, 30a) est relié à la structure de base de siège (14a).

3. Dispositif à fixation de siège d'avion selon l'une quelconque des revendications précédentes,
**caractérisé en ce que** l'unité de compensation (44a, 46a) est prévue pour permettre - au moins dans un cas de surcharge - au moins une rotation du pied de siège (28a, 30a) autour d'un arbre rotatif (50a) par rapport à la structure de base de siège (14a).

4. Dispositif à fixation de siège d'avion selon l'une quelconque des revendications précédentes,
**caractérisé en ce qu'**un mouvement de compensation réalisé par l'unité de compensation (44a, 46a) est au moins sensiblement exempt d'une déformation élastique et/ou plastique.

5. Dispositif à fixation de siège d'avion selon l'une quelconque des revendications précédentes,
**caractérisé en ce que** l'unité de compensation (44a, 46a) comprend au moins une unité de positionnement (78a) qui positionne l'au moins un moyen de liaison (52a, 54a, 56a, 58a) - au moins dans un état de fonctionnement normal - dans le trou de passage (70a, 72a, 74a, 76a) dans une position normale.

6. Dispositif à fixation de siège d'avion selon la revendication 5,
**caractérisé en ce que** l'unité de positionnement (78a) maintient le moyen de liaison (52a, 54a, 56a, 58a) dans la position normale par une force de précontrainte de manière de liaison par adhérence.

7. Siège d'avion
comprenant un dispositif à fixation de siège d'avion selon l'une quelconque des revendications 1 à 6.
